# EUROPEAN PATENT APPLICATION

(11) **EP 4 714 865 A1**
(43) Date of publication of application: **25.03.2026**
(21) Application number: 24861650.0
(22) Date of filing: 04.07.2024
(51) Int. Cl.: B65G 1/04, B65G 35/06, B60B 17/00, B66F 9/07

(54) **RAIL APPARATUS FOR THREE-DIMENSIONAL WAREHOUSE STACKER AND STACKER SYSTEM**

(30) Priority: 06.09.2023 CN 202311148740; 30.11.2023 CN 202323265913 U
(71) Applicant: Meetfuture Technology (Shanghai) Co., Ltd., Shanghai 201306 (CN)
(72) Inventor: WANG, Dongling, Shanghai 201306 (CN); MIAO, Feng, Shanghai 201306 (CN)
(74) Representative: Balder IP Law, S.L.
(86) International application number: PCT/CN2024/103652
(87) International publication number: WO 2025/050805

(57) **Abstract**

Embodiments of the present disclosure provide a track apparatus for stackers for a stocker, applicable to the field of handling apparatus for semiconductors. The track apparatus includes an overhead track mounted on a top of an aisle in the stocker and ground tracks mounted on a bottom of the aisle in the stocker and parallel to the overhead track. The overhead track is moveably engaged with a top of a stacker and is configured to provide overhead guide to horizonal movement of the stacker. The ground tracks include two guide tracks and a travelling track arranged between the two guide tracks and parallel to the two guide tracks. The two guide tracks are configured to provide ground guide to the horizonal movement of the stacker, and the travelling track is configured to provide support to the horizonal movement of the stacker. With the overhead track and the ground tracks that adopt new structures and provide support and guide to the horizonal movement of the stacker, stable and high-accuracy operation of the stacker can be ensured.

## Description

### TECHNICAL FIELD

The present disclosure relates to the field of handling apparatus for semiconductors, and in particular to a track apparatus for stackers for a stocker and a stacker system.

### BACKGROUND

With the widespread application of integrated circuits in daily life, the rapid development of the stereoscopic warehousing industry, and the diversification of storage forms of goods, the structural forms of warehouses for goods are increasing. The gradual increase in the stereoscopic warehousing heights and the weights of goods increases the requirements for the load-bearing capacity, performance, and efficiency of storing and retrieving goods of stackers.

Currently, in the factory workshops of an automatic material handling system (AMHS), a single track is generally mounted on a bottom of a stereoscopic warehouse, and racks that match gears on a base of a stacker are mounted on this track to form a drive mechanism that drives the stacker to move. However, this track structure leads to, due to the wear and tear of the gears and racks, a decrease in operation accuracy and instability during operation of the handling apparatus such as stackers, and further to generation of dust. In addition, the reliability, safety, and flexibility of the stackers operating on this track for a long time are low, thereby affecting the storage and retrieval efficiency of the stackers.

### SUMMARY

Embodiments of the present disclosure provide a track apparatus for stackers for a stocker, including: an overhead track mounted on a top of an aisle in the stocker, the overhead track is moveably engaged with a top of a stacker and is configured to provide overhead guide to horizonal movement of the stacker; and ground tracks mounted on a bottom of the aisle in the stocker and parallel to the overhead track, the ground tracks include two guide tracks and a travelling track arranged between the two guide tracks and parallel to the two guide tracks, the two guide tracks are configured to provide ground guide to the horizonal movement of the stacker, and the travelling track is configured to provide support to the horizonal movement of the stacker.

Optionally, each guide track of the two guide tracks includes a first fixing plate and a first track provided with at least one sliding seat; and the first fixing plate is fixedly mounted on the bottom of the aisle, the first track is fixedly mounted on the first fixing plate, and the at least one sliding seat of the first track is configured to be connected to the stacker.

Optionally, each guide track of the two guide tracks further includes at least one first limiting device, and each respective first limiting device of the at least one first limiting device includes a first anticollision block and a first buffer block; and the first anticollision block is fixedly mounted on the first fixing plate, the first buffer block is mounted on the first anticollision block, and the first buffer block is configured to elastically deform to buffer inertia in a collision in response to the stacker colliding with the respective first limiting device.

Optionally, the track apparatus for the stackers for the stocker further includes a plurality of first adjustment gaskets arranged in gaps between the first fixing plate and a mounting plate in the aisle, where the plurality of first adjustment gaskets are configured to provide a preset distance and an alignment degree between the first fixing plate and the mounting plate in the aisle.

Optionally, each guide track of the two guide tracks further includes a plurality of first positioning elements arranged on the first fixing plate at preset intervals, where the plurality of first positioning elements are configured to determine positions of the stacker during the horizonal movement of the stacker to prevent movement displacement of the stacker from exceeding a first preset threshold; and/or each guide track of the two guide tracks further includes a plurality of second positioning elements arranged on the first fixing plate at preset intervals, where the plurality of second positioning elements are configured to determine a mounting position of the first fixing plate during mounting the first fixing plate to the bottom of the aisle to prevent a mounting error of the first fixing plate from exceeding the second preset threshold.

Optionally, a plurality of first counterbored slots are defined on the first fixing plate, the plurality of first counterbored slots are configured for fixedly mounting the first fixing plate on the bottom of the aisle, and for adjustment of a position of the first fixing plate during mounting; and/or a plurality of second counterbored slots are defined on the first track, the plurality of second counterbored slots are configured for fixedly mounting the first track to the first fixing plate using at least one fastening screw, and for adjustment of a relative position between the first track and the first fixing plate during mounting.

Optionally, the travelling track includes a second fixing plate and a support plate mounted on the second fixing plate, the second fixing plate is configured to be fixedly mounted on the bottom of the aisle, and the support plate is configured to provide support to the horizonal movement of the stacker.

Optionally, the travelling track further includes a profile arranged between the second fixing plate and the support plate, and the profile has a rigidity less than a rigidity of at least one of the second fixing plate and the support plate.

Optionally, the travelling track further includes a contact layer arranged on the support plate, and the contact layer is configured to contact with a travelling wheel of the stacker to provide support to the horizonal movement of the stacker.

Optionally, a first groove is defined on a top surface of the second fixing plate, a second groove is defined on a bottom surface of the support plate, a third groove is defined on a top surface of the support plate, the profile is embedded into the first groove and the second groove, and the contact layer is embedded into the third groove.

Optionally, a plurality of mounting grooves are defined on the profile, the plurality of mounting grooves pass through the profile along a length direction of the profile, and each mounting groove of the plurality of mounting grooves is configured to receive a respective plurality of nuts; a respective cross-section of each mounting groove of the plurality of mounting grooves has an opening and a groove bottom, and a width of the opening is less than a width of the groove bottom; and each nut of the respective plurality of nuts is configured to, after the profile is embedded into the first groove and the second groove, engage with a corresponding bolt passing through the support plate or through the second fixing plate to tightly fix the profile to the support plate or to the second fixing plate.

Optionally, a first through hole is defined on the profile, the first through hole passes through the profile along the length direction of the profile, and the first through hole is defined at a center of a cross-section of the profile.

Optionally, a plurality of second through holes are defined on the profile, the plurality of second through holes pass through the profile along the length direction of the profile, each second through hole of the plurality of second through holes has a diameter less than a diameter of the first through hole, and the plurality of second through holes are defined to surround the first through hole and space from the first through hole along a width direction of the profile.

Optionally, the third groove has a width that is greater than a width of the second groove and is greater than a width of the contact layer, gaps are defined on the support plate and on both sides of the third groove at intervals, and the gaps are configured for arranging and removing the contact layer through the gaps, and for adjustment of a position of the contact layer.

Optionally, each of the second fixing plate, the profile, the support plate and the contact layer has a respective segmented structure that includes a plurality of segments assembled together, and joints of segments of the second fixing plate, joints of segments of the profile, joints of segments of the support plate, and joints of segments of the contact layer misalign with one another.

Optionally, one respective joint of the joints of the segments of the contact layer has a structure of assembled beveled surfaces, each beveled surface of the beveled surfaces forms a sharp angle with a travelling direction, and the sharp angle ranges from 10° to 80°; and/or the contact layer is a plate material having low surface roughness and having a surface suitable for travelling of the travelling wheel of polyurethane.

Optionally, a plurality of third counterbored slots are defined on the contact layer, the plurality of third counterbored slots are configured for fixing the contact layer to the support plate using screws through the plurality of third counterbored slots, and for adjustment of a horizonal relative position between the contact layer and the support plate during fixing using screws; and/or a plurality of fourth counterbored slots are defined on the second fixing plate, the plurality of fourth counterbored slots are configured for fixing the second fixing plate on the bottom of the aisle using screws through the plurality of fourth counterbored slots, and for adjustment of a horizonal relative position between the second fixing plate and the two guide tracks during fixing using screws.

Optionally, the plurality of third counterbored slots are defined on two sides of the contact layer, and the plurality of fourth counterbored slots are defined on two sides of the second fixing plate; and the contact layer has a width greater than or equal to a sum of a width of the travelling wheel in an axial direction of the travelling wheel and a width of at least one respective third counterbored slot of the plurality of third counterbored slots, the support plate has a width greater than or equal to a sum of a width of the contact layer and a width of a reserved structure, the profile has a width greater than or equal to the width of the travelling wheel in the axial direction, and the second fixing plate has a width greater than or equal to a sum of the width of the support plate and a width of at least one respective fourth counterbored slot of the plurality of fourth counterbored slots.

Optionally, the contact layer has a width greater than or equal to a sum of the width of the profile and the width of the at least one respective third counterbored slot of the plurality of third counterbored slots.

Optionally, the track apparatus for the stackers for the stocker further includes a plurality of second adjustment gaskets arranged in gaps between the second fixing plate of the travelling track and the mounting plate in the aisle, where the plurality of second adjustment gaskets are configured to provide a preset distance and an alignment degree between the travelling track and the mounting plate.

Optionally, the overhead track includes a single track constituted of a plurality of end-to-end connected rails, the stacker has a guide wheel assembly that is arranged on both sides of the single track and has a plurality of guide wheels, each guide wheel of the plurality of guide wheels is configured to moveably contact with a respective lateral surface of the single track to prevent the stacker from tilting.

Optionally, each end of two ends of the single track is provided with a respective second limiting device including a second anticollision block and a second buffer block, the second anticollision block is fixedly mounted on the single track, the second buffer block is mounted on the second anticollision block, and the second buffer block is configured to elastically deform to buffer inertia in a collision in response to the stacker colliding with the respective second limiting device.

Optionally, the track apparatus for the stackers for the stocker further includes a barcode device including a plurality of barcodes and a barcode reader, the plurality of barcodes are arranged on the ground tracks, and the barcode reader is arranged on a travelling mechanism of the stacker.

Some embodiments of the present disclosure provide a stacker system, including the track apparatus as illustrated above and the stacker. The stacker includes a travelling box, a support seat and a travelling wheel mounted on the support seat, one end of the support seat is rotatably hinged on the travelling box, an other end of the support seat is coupled to the travelling box via an elastic assembly elastically deformable at least in a vertical direction, and at least a portion of the support seat is arranged in the travelling box. Each guide track of the two guide tracks includes a first fixing plate and a first track provided with at least one sliding seat, the first fixing plate is fixedly mounted on the bottom of the aisle, the first track is fixedly mounted on the first fixing plate, and the at least one sliding seat of the first track is configured to be connected to a bottom of the travelling box. The travelling track includes a second fixing plate fixedly mounted on the bottom of the aisle and at least one layer arranged on the second fixing plate, the at least one layer includes an elastic layer having elastic characteristics, and the elastic layer and the elastic assembly are configured to absorb or suppress vibration transmitted by the travelling wheel together or individually.

Compared with the related technologies, at least one of the technical solutions according to the embodiments of the present disclosure can achieve at least the beneficial technical effects as follows.

In the stocker, the overhead track and the ground tracks are used to guide the stacker together, and the ground tracks include the guide tracks and the travelling track to support the horizonal movement of the stacker. All of the overhead track and the ground tracks can be made of dust-free and high-accuracy straight tracks, in this way, stackers in the stocker can be provided with a high-accuracy, reliable and stable track structure, which is beneficial for improving the position accuracy of the stackers, thereby being conducive to increase in the travelling speed, accuracy of storing and retrieving goods, and long-term operational reliability of the stackers.

Moreover, in addition to providing the high-accuracy track structure, the track structure of the combination of the overhead track and the ground tracks can facilitate the processing, manufacturing, installation, and trial run of the assemblies of the overhead track and the ground tracks.

In addition, even for the situation where the stored goods have large stacking height and weight, the structure of the ground tracks can still ensure that the stackers can achieve smooth, accurate, and fast operations such as travelling, and grabbing and placing of workpieces during operation, thereby improving the deployment flexibility of the stackers in the stocker.

Besides, arrangement of the elastic assembly at a bottom of a stacker in the stocker can allow vertical movements with small amplitude of the travelling wheel, and the travelling wheel runs on the travelling track that has a multi-layer structure including an elastic layer, in this way, the vibration during travelling of the stacker along the travelling track can be absorbed or suppressed.

### BRIEF DESCRIPTION OF THE DRAWINGS

In order to more clearly illustrate the technical solutions of the embodiments of the present disclosure, a brief description will be given to the drawings required for the embodiments. It is obvious that the drawings described below are only some embodiments of the present disclosure. For those skilled in the art, other drawings can be obtained based on these drawings without inventive effort.
FIG. 1 is a schematic diagram of a perspective view of a structure of a track including an overhead track and ground tracks for a stacker according to some embodiments of the present disclosure.
FIG. 2 is a schematic diagram of a front view of the structure of the track including the overhead track and the ground tracks for a stacker according to some embodiments of the present disclosure.
FIG. 3 is a schematic diagram of a left view of the structure of the track including the overhead track and the ground tracks for a stacker according to some embodiments of the present disclosure.
FIG. 4 is a schematic diagram of a perspective view of a structure of the ground tracks according to some embodiments of the present disclosure.
FIG. 5 is a schematic diagram of a top view of the structure of the ground tracks according to some embodiments of the present disclosure.
FIG. 6 is a schematic diagram of a structure of a portion of the ground tracks according to some embodiments of the present disclosure.
FIG. 7A is a schematic diagram of the structure of the ground tracks illustrating that one end of a ground track is provided with a limiting device according to some embodiments of the present disclosure.
FIG. 7B is a schematic diagram of a perspective view of the travelling track having a four-layer structure according to some embodiments of the present disclosure.
FIG. 7C is a schematic diagram of a front view of an end of the travelling track having the four-layer structure according to some embodiments of the present disclosure.
FIG. 7D is a schematic diagram of traditional assembled surfaces.
FIG. 7E is a schematic diagram of a structure of assembled beveled surfaces according to some embodiments of the present disclosure.
FIG. 7F is a schematic diagram of a structure of a cross-section of a profile according to some embodiments of the present disclosure.
FIG. 8 is a schematic diagram of the structure of the ground tracks illustrating that one end of a guide track of the ground tracks is provided with a limiting device according to some embodiments of the present disclosure.
FIG. 9 is a schematic diagram of a perspective view of a structure of the overhead track according to some embodiments of the present disclosure.
FIG. 10 is a schematic diagram of a top view of the structure of the overhead track according to some embodiments of the present disclosure.
FIG. 11 is a schematic diagram of the structure of the overhead track illustrating that one end of the overhead track is provided with a limiting device according to some embodiments of the present disclosure.
FIG. 12 is a structural schematic diagram illustrating mounting of the overhead track according to some embodiments of the present disclosure.
FIG. 13 is a structural schematic diagram illustrating mounting and adjustment of gaskets according to some embodiments of the present disclosure.
FIG. 14 is a structural schematic diagram illustrating adjustment of the gaskets according to some embodiments of the present disclosure.
FIG. 15 is a structural schematic diagram illustrating mounting of positioning elements on a track according to some embodiments of the present disclosure.
FIG. 16 is a structural schematic diagram illustrating fixing and mounting of tracks according to some embodiments of the present disclosure.
FIG. 17 is a schematic diagram of a perspective view of a structure of a travelling box of a stacker according to some embodiments of the present disclosure.
FIG. 18 is a schematic diagram of an internal structure of the travelling box of a stacker according to some embodiments of the present disclosure.
FIG. 19 is a top view of a cross-section of the travelling box of a stacker according to some embodiments of the present disclosure.
FIG. 20 is a side view of a stacker according to some embodiments of the present disclosure.

### DETAILED DESCRIPTION OF THE EMBODIMENTS

A detailed description of the embodiments of the present disclosure will be provided below, in conjunction with the accompanying drawings.

The embodiments of the present disclosure will be illustrated using the following specific examples, and those skilled in the art can easily understand the other advantages and effects of the present disclosure based on the content disclosed in the present disclosure. Obviously, the described embodiments are only a part of the embodiments of the present disclosure, not all of them. The present disclosure can also be implemented or applied based on other different embodiments, and various details in the present disclosure can be modified or changed based on different perspectives and applications without departing from the spirit of the present disclosure. It should be noted that, without conflict, the following embodiments and their features can be combined with each other. Based on the embodiments of the present disclosure, all other embodiments obtained by ordinary skilled persons in the art without inventive efforts fall within the scope of protection of the present disclosure.

It should be noted that the following describes various aspects of the embodiments within the scope of the appending claims. It is apparent that the aspects described in the present disclosure can be embodied in a wide variety of forms, and any specific structure and/or function described in the present disclosure is illustrative only. Based on the present disclosure, those skilled in the art shall understand that one aspect described in the present disclosure can be implemented independently of any other aspect, and two or more of these aspects can be combined in various ways. For example, any number and aspects described in the present disclosure can be used to implement devices and/or methods. In addition, other structures and/or functionalities besides one or more of the aspects described in the present disclosure may be used to implement the devices and/or the methods.

It should be noted that the schematic diagrams provided in the following embodiments only schematically illustrate the basic concept of the present disclosure. The schematic diagrams only illustrate the components related to the present disclosure and are not drawn according to the actual number, shapes, and sizes of the components in implementation. The form, quantity, and proportion of each component in actual implementation can be arbitrarily changed, and the layout of the components may also be more complex.

Moreover, providing specific details in the following description is to facilitate a thorough understanding of the examples. However, those skilled in the art shall understand that the implementation can be without these specific details.

In the application scenario of automated stockers, stackers are becoming increasingly popular. The main modules of a stacker include a cargo platform, a travelling drive apparatus, columns, crossbeams, a lifting drive apparatus, an overhead track, ground tracks, and the like. The overhead track and ground tracks play a very important role in the operation of the stackers. In addition, the error and accuracy requirements in the design, processing, manufacturing, or mounting and trial run of the drive devices and guiding devices of the overhead track and ground tracks will directly affect the quality of the subsequent normal operation of the stackers.

With the overhead track and ground tracks having new structures, a new track apparatus can be obtained, and the stackers for stockers of a semiconductor factory can be provided with a new track mechanism.

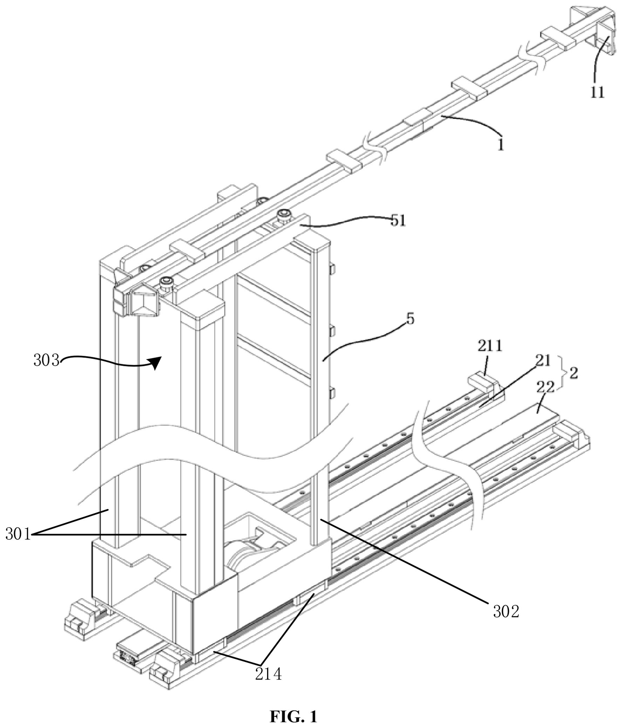

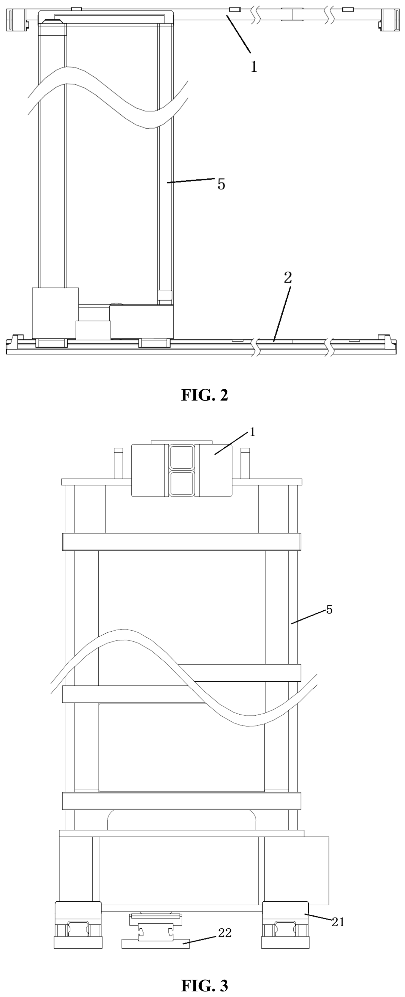

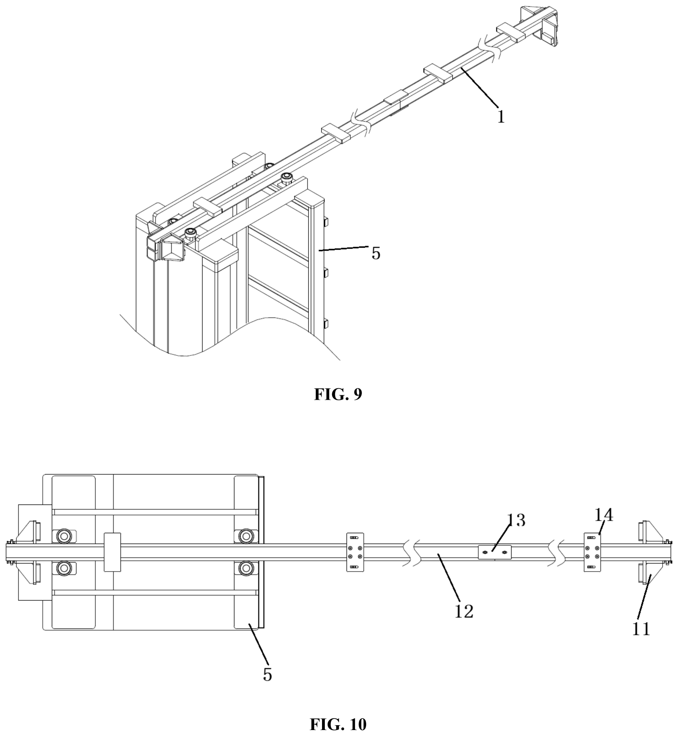

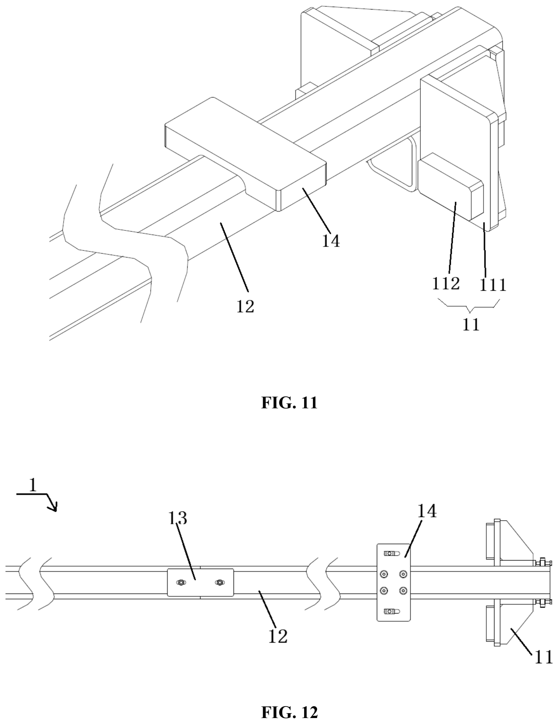

Referring to FIGS. 1 to 15, the track apparatus for stackers for a stocker according to the present disclosure may include: an overhead track 1 and ground tracks 2. The overhead track 1 is mounted on a top of an aisle in the stocker, is moveably engaged with a top of a stacker 5 and is configured to provide overhead guide to horizonal movement of the stacker 5. The ground tracks 2 are arranged parallel to the overhead track 1 and are mounted on a bottom of the aisle in the stocker.

The ground tracks 2 include two guide tracks 21 and a travelling track 22 arranged between the two guide tracks 21 and parallel to the two guide tracks 21. The two guide tracks 21 are configured to provide ground guide to a base of the stacker 5 during the horizonal movement, and the travelling track 22 is configured to provide support to the base of the stacker 5 during the horizonal movement.

The overhead track 1 and the ground tracks 2 may be implemented using dust-free and high-accuracy tracks, which are conducive to the high accuracy of the horizonal movement of the stacker 5.

It should be noted that a stacker may be a mechanism that includes a lifting mechanism, a cargo platform, a fork device, and the like, and will not be specifically limited here. In addition, the main frame of the stacker may be a frame mechanism formed by a plurality of columns, which will not be specifically limited here.

Moreover, the movement process of the stacker is illustrated as follows: the two guide tracks 21 and the travelling track 22 of the ground tracks 2 provide high-accuracy and stable support to the stacker 5, and the ground tracks 2 and the overhead track 1 together guide the horizonal movement of the stacker 5. In this way, when the travelling wheel inside the base of the stacker 5 travels on the travelling track 22, the stacker 5 receives not only good support performance from the ground tracks 1, but also stable guidance from the overhead track 1 and the ground tracks 2. Therefore, the stacker 5 can operate stably and be prevented from overturning during operation.

In some embodiments, as illustrated above, the stacker 5 is deployed in the aisle in the stocker, and the horizonal movement of the stacker 5 is supported by the ground tracks, where the two guide tracks 21 are configured to support and guide the stacker 5.

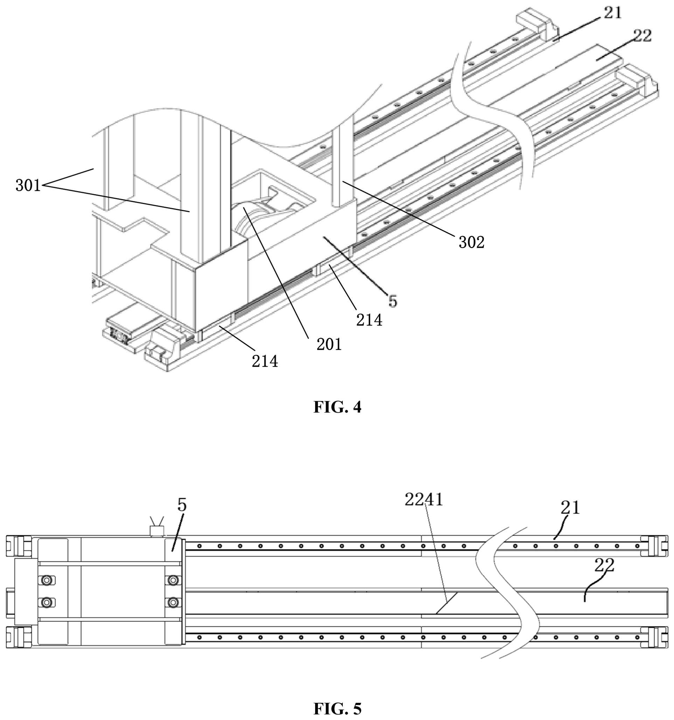

As shown in FIG. 4, the travelling wheel 201 in the base of the stacker passes through a bottom plate of the stacker 5 and rubs against the travelling track 22 on the ground. The surface of the travelling wheel 201 uses a high-friction wheel surface (with a friction coefficient µ ranging from 0.3 to 0.45), which may be made of high elastic wear-resistant rubber to increase the friction coefficient between the surface of wheel and the travelling track 22, thereby facilitating rapid acceleration and deceleration response, and extending the service life, reducing dust generation and reducing noise. The travelling track 22 that cooperates with the travelling wheel 201 may be made by processing aluminum alloy tracks to ensure good flatness of the tracks, thereby minimizing wear of the travelling wheel 201 during operation, and reducing environmental dust generated during operation.

Moreover, sliding grooves configured to engage with the guide tracks 21 are defined on the bottom of the stacker, and the guide tracks 21 can provide the pressure from the stacker to the ground and a pulling force by engaging with sliding seats 214. Specifically, when the travelling wheel 201 cannot support the weight of the entire stacker, the guide tracks 21 provide the pulling force to prevent the travelling wheel 201 from continuing to adjust downwards. That is, when the travelling wheel 201 only bears part of the weight of the stacker, the remaining weight of the stacker will be borne by the guide tracks 21, thereby ensuring the overall stability of the stacker.

In other words, the guide tracks 21 are engaged with the base of the stacker through the sliding seats. When the stacker starts and stops, due to the inertia of the stacker, the sliding seats at the front and rear ends of the bottom of the travelling box along the travelling direction are subjected to a pair of action forces along opposite directions provided by the guide tracks 21, respectively, namely an upward support force and a downward pulling force, thereby preventing the stacker from tilting or swinging relative to a vertical direction in a plane of Y-axis and Z-axis. When the stacker is running, due to a certain height of the stacker in the Z direction, when the stacker has a tilting tendency, two sets of sliding seats that are engaged on the guide tracks 21 provide a pair of action forces along opposite directions, namely another upward support force and another downward pulling force, thereby preventing the stacker from swinging towards either side of the travelling track 22 relative to a vertical direction in a plane of X-axis and Z-axis. During normal operation, the travelling wheel will apply an appropriate downward pressure to the travelling track 22 (to generate the frictional force required for normal travelling). At this time, the guide tracks 21 will share part of gravity generated by the weight of the stacker, thereby reducing the upward support force provided by the travelling track 22 to the stacker. In addition, when the stacker is going to deviate from a preset path during travelling, the guide tracks provide a limiting force to correct the travelling direction of (the sliding seats on the bottom of) the stacker.

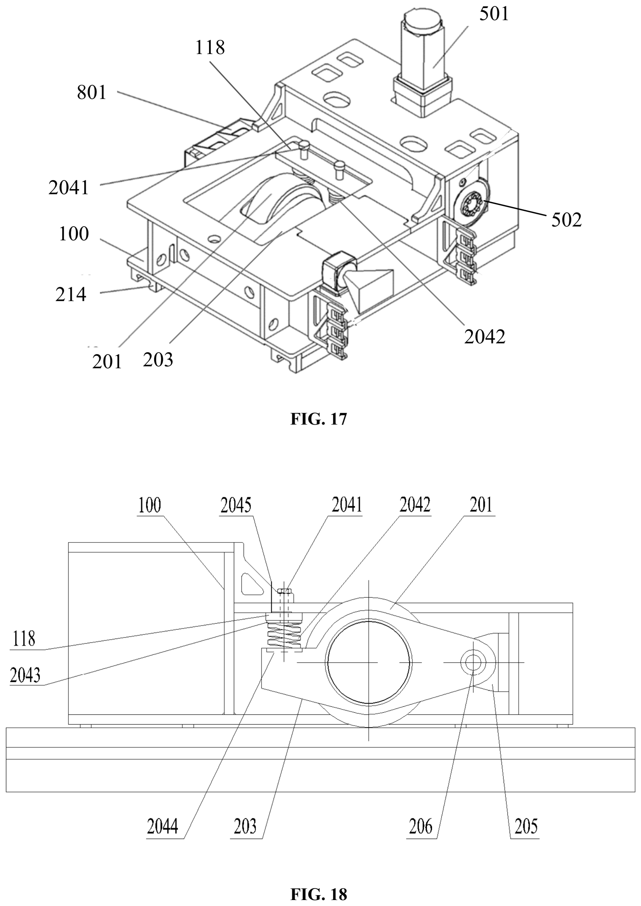

As shown in FIGS. 17 to 19, the travelling wheel 201 is supported in the travelling box 100 (i.e. the base) by a support seat 203. One end of the support seat 203 is rotatably fixed in the travelling box 100, and the other end of the support seat 203 is fixed in the travelling box 100 by an elastic assembly 204 vertically arranged above the support seat 203, thereby forming a lever structure. The downward pressure exerted by the elastic assembly 204 enables the travelling wheel 201 to travel on the travelling track 22, and vibration damping can be realized by the action of the elastic assembly 204. Herein, a vertical direction refers to a height direction of the travelling box 100.

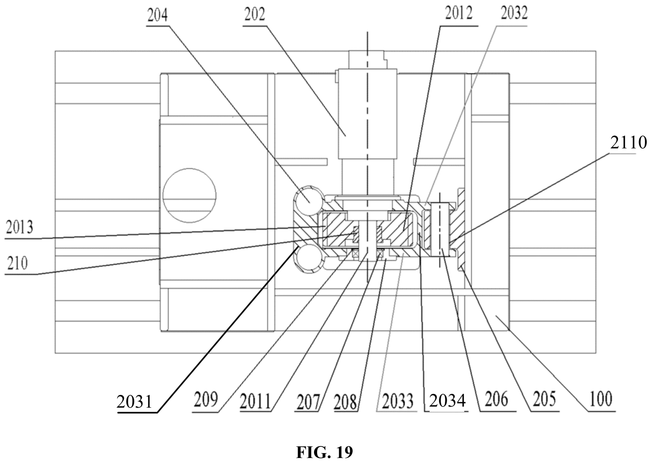

Specifically, a fixing seat 205 is provided on side walls of the travelling box 100, and one end of the support seat 203 is rotatably connected with the fixing seat 205 via a connecting rotation shaft 206, so that the travelling wheel 201 can swing around the connecting rotation shaft 206 and the fixing seat 205. As shown in FIG. 19, a rotation shaft 2011 of the travelling wheel 201 is arranged to be coaxially connected with an output shaft of a drive motor 202, so that the rotation shaft 2011 of the travelling wheel 201 rotates synchronously when the output shaft of the drive motor 202 rotates, thereby driving the travelling wheel 201 to roll forward along the travelling track 22. In some embodiments, the connecting rotation shaft 206 is arranged to be parallel to the rotation shaft 2011 of the travelling wheel 201, so that in a case where the travelling track 22 is not flat, the travelling wheel 201 can move vertically with the aid of the swinging of the support seat 203 to adapt to the change of the travelling surface of the track. In some embodiments, the fixing seat 205 is made of stainless steel, which has anticorrosion and anti-rust functions. The fixing seat 205 is fixed to the side walls of the travelling box 100 by screws during mounting.

In the embodiments shown in FIG. 17, the elastic assembly 204 is configured to generate a stable and controllable pressure between the travelling wheel 201 and the travelling track 22, and mainly includes an elastic element and an elastic force adjusting mechanism. The elastic element is arranged vertically and a bottom end of the elastic element is connected to a top surface of the other end of the support seat 203. The elastic force adjusting mechanism is connected with a top end of the elastic element and is configured to adjust an elastic force generated by the elastic element. By adjusting the elastic force of the elastic element using the elastic force adjusting mechanism, the pressure applied to the other end of the support seat 203 can be adjusted, and therefore the pressure applied by the travelling wheel 201 to the travelling track 22 can be adjusted, so as to meet the different use requirements.

Referring to FIG. 17, a position-limiting plate 118 is provided in the travelling box 100, and the position-limiting plate 118 is transversely arranged above the elastic element. The elastic force adjusting mechanism includes a fixing member 2041 that is in threaded fit with the position-limiting plate 118, and a bottom end of the fixing member 2041 is connected with the top end of the elastic element. The position-limiting plate 118 is configured herein to bear the reaction force applied by the elastic element on the fixing member 2041, and has the function of bending resistance and preventing the relative movement of the fixing member 2041. In some embodiments, the fixing member 2041 adopts a standard fine-thread screw, which is simple to process and mold, and can bear high pressure without loosening easily. Herein, a transverse direction refers to a width direction of the travelling box 100.

Referring to FIG. 18, the elastic element includes: an elastic element body 2042, a first clamping plate 2043 in snap fit with a top end of the elastic element body 2042, and a second clamping plate 2044 in snap fit with a bottom end of the elastic element body 2042. The first clamping plate 2043 is fixedly connected with the bottom end of the fixing member 2041 of the elastic force adjusting mechanism, and the second clamping plate 2044 is fixedly connected with the other end of the support seat 203 by bolts. The elastic element body 2042 may be a high-strength spring, which can ensure the stability of the pressure applied to the friction drive wheel 201. The first clamping plate 2043 and the second clamping plate 2044, as the position-limiting supporting mechanism at two ends of the elastic element, can prevent the elastic element body 2042 from falling out of position when compressed. It should be understood that the elastic element body 2042 is not limited to the high-strength spring, and can adopt any other suitable elastic body, such as elastic rubber, which will not be specifically limited here.

In some embodiments, as shown in FIG. 18, the elastic assembly 204 further includes a scale 2045 vertically mounted to a top surface of the position-limiting plate 118, and the scale 2045 is arranged adjacent to and parallel to the fixing member 2041. When the fixing member 2041 is adjusted vertically, the scale 2045 can reflect an adjustment amount in real time, which facilitates precise application of the desired pressure to the travelling wheel 201.

In some embodiments, the support seat 203 is configured to provide a mounting space for the travelling wheel 201 and, as shown in FIG. 19, includes a first connecting portion 2031, a first mounting plate 2032, a second mounting plate 2033, and a second connecting portion 2034 which are integrally formed. The first mounting plate 2032 and the second mounting plate 2033 are located at two ends of the first connecting portion 2031, respectively, and are symmetrically arranged along the width direction of the travelling box 100, so that the travelling wheel 201 is fixed in a space defined by the first connecting portion 2031, the first mounting plate 2032, the second mounting plate 2033, and the second connecting portion 2034, and the rotation shaft 2011 of the travelling wheel 201 is orthogonal to the first mounting plate 2032 and the second mounting plate 2033.

A casing of the travelling power mechanism 202 is fixedly connected with a side of the first mounting plate 2032 away from the second mounting plate 2033 by screws. The first mounting plate 2032 and the second mounting plate 2033 are further provided with coaxial through holes, respectively. The output shaft of the travelling power mechanism 202 passes through the through hole of the first mounting plate 2032 and is connected with one end of the rotation shaft 2011 of the travelling wheel 201, and the other end of the rotation shaft 2011 of the travelling wheel 201 extends through the through hole of the second mounting plate 2033. The support seat 203 enables the travelling wheel 201 to operate more stably.

In some embodiments, two elastic assemblies 204 are provided, the first connecting portion 2031 is arranged transversely, and the other end of the first mounting plate 2032 and the other end the second mounting plate 2033 are connected via the first connecting portion 2031, so that the first connecting portion 2031 is connected with the two elastic assemblies 204 as the other end of the support seat 203, to adjust the pressure applied to the travelling wheel 201 using the two elastic assemblies 204. It should be understood that in order to ensure stable operation of the travelling wheel, the pressures applied to the travelling wheel 201 by the two elastic assemblies 204 should be the same.

In some embodiments, as shown in FIG. 19, the travelling wheel 201 includes the rotation shaft 2011, a hub 2012, and a wheel surface 2013. The rotation shaft 2011 and hub 2012 of the travelling wheel 201 may be made of materials such as stainless steel, carbon steel, and aluminum alloy. When made of stainless steel, the stainless steel can enhance rust and dirt resistance, and when made of aluminum alloy, the aluminum alloy can reduce the overall weight of the travelling wheel 201.

In some embodiments, as shown in FIG. 19, a bearing 207 sleeved on the rotation shaft 2011 of the travelling wheel 201 is further provided in the through hole of the second mounting plate 2033, the bearing 207 is used as a supporting rotary component of the rotation shaft 2011 herein. In addition, the second mounting plate 2033 is provided with a bearing cover 208 on a side away from the first mounting plate 2032, and the bearing cover 208 has a sleeve portion engaged between the bearing 207 and the second mounting plate 2033 along an axial direction of the bearing 207. The bearing cover provides a position limit for the bearing 207 on the one hand, and has a dust-proof function on the other hand.

In some embodiments, as shown in FIG. 19, a retaining ring 209 is sleeved on the rotation shaft 2011 of the travelling wheel 201, and the retaining ring 209 abuts against one end of the bearing 207 away from the bearing cover 208. The retaining ring 209 herein is used as a peripheral position-limiting part of the bearing 207 to prevent the bearing 207 from moving in an axial direction, and has the advantages of convenient disassembly. In addition, a tensioning sleeve 210 is engaged between the rotation shaft 2011 of the travelling wheel 201 and the hub 2012 of the travelling wheel 201, and the tensioning sleeve 210 is configured to firmly lock the hub 2012 of the travelling wheel 201 to the rotation shaft 2011. The tensioning sleeve has the functions of a high-torque transmission output and self-alignment.

In some embodiments, as shown in FIG. 19, an oil-free bushing 2110 is engaged between the connecting rotation shaft 206 and the fixing seat 205. As an intermediate component for the relative rotation of the connecting rotation shaft 206 and the fixing seat 205, the bushing 2110 has the advantages of high wear resistance and high pressure resistance, and the bushing can be replaced based on inspection of the wear condition during use.

In some embodiments, as shown in FIG. 4, a plurality of sliding seats 214 are mounted at the bottom of the travelling box 100, and each of the sliding seats 214 is in sliding fit with a respective guide track 21 on the ground. Specifically, two rows of sliding seats 214 are arranged at the bottom of the travelling box 100, which are arranged on two sides of the travelling wheel 201 along the width direction of the travelling box 100, respectively. An extension direction of each of the sliding seats 214 is parallel to the travelling direction of the travelling wheel 201, so that the sliding seats 214 and the travelling wheel 201 can move along the travelling direction of the travelling device simultaneously.

Referring to FIGS. 1 to 8, each guide track of the two guide tracks 21 includes a first fixing plate 212 and a first track 213 provided with at least one sliding seat 214. The first fixing plate, as a basis plate configured to provide a basis of guide and fixing, is fixedly mounted on the bottom of the aisle, the first track 213 is fixedly mounted on the first fixing plate 212, and the at least one sliding seat of the first track 212 is configured to be connected to the base of the stacker 5.

By forming the bodies of the guide tracks using the fixing plates and the tracks, it is convenient for the design, processing, manufacturing, mounting and trial run of the guide apparatus. Moreover, the error and accuracy control of each component are easy to implement. For example, with the processing or installation and adjustment of the tracks and/or fixing plates, high-accuracy guide tracks can be obtained, thereby improving the quality of normal operation of the stacker on the ground tracks.

In some embodiments, using adjustment gaskets can further improve the mounting accuracy of the guide tracks, and is convenient for the mounting and trial run of the tracks.

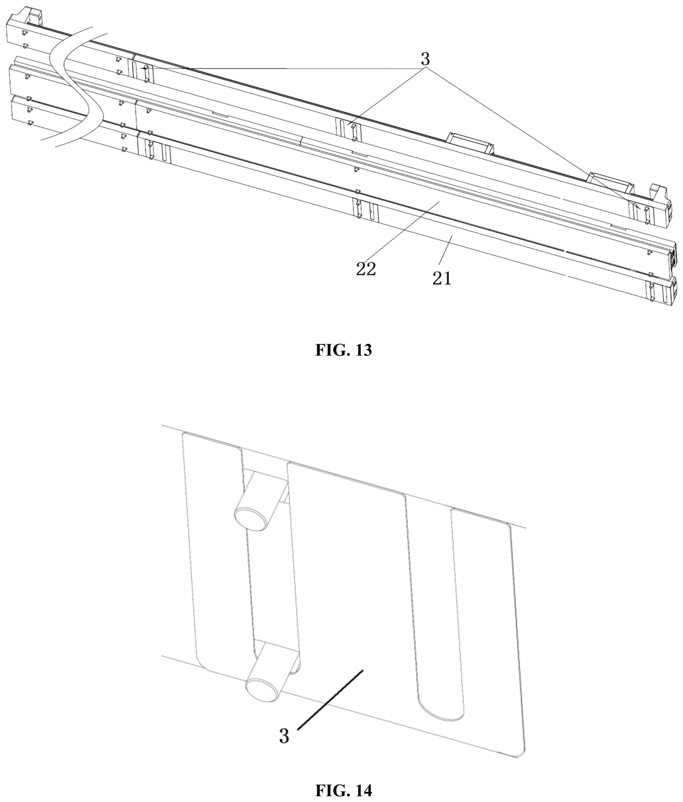

Referring to FIGS. 13 and 14, the track apparatus for the stackers for the stocker further includes a plurality of first adjustment gaskets 3 arranged in gaps between the first fixing plate 212 and a mounting plate (not shown in the drawings) in the aisle.

The adjustment gaskets may have a "E" shape or other shapes, so that the adjustment gaskets can be easily inserted into the gaps during mounting to complete mounting and trial run.

The adjustment gaskets not only can facilitate the mounting and trial run, but also can ensure the preset distance and the alignment degree between the first fixing plate and the mounting plate in the aisle, thereby ensuring the mounting accuracy of the first track and the first fixing plate, and meeting the high-accuracy requirements of the stacker.

In some embodiments, when the travelling mechanism of the stacker moves to extreme positions at both ends of one respective track, unexpected situations may occur due to inertia factors, such as running off the one respective track. Therefore, in order to ensure safe and stable operation, limit devices and buffer devices may be added to the ends of the one respective track. The travelling mechanism of the stacker includes the travelling box, the travelling wheel, and the like.

In some embodiments, referring to FIGS. 1 to 8, each guide track of the two guide tracks 21 further includes at least one first limiting device 211, and each respective first limiting device of the at least one first limiting device 211 includes a first anticollision block 2111 and a first buffer block 2112. The first anticollision block 2111 is fixedly mounted on the first fixing plate 212, the first buffer block 2112 is mounted on the first anticollision block 2111, and the first buffer block 2112 is configured to elastically deform to buffer inertia in a collision in response to the base of the stacker 5 colliding with the respective first limiting device 211. It should be noted that the stacker may collide with the first buffer block at the base or at other parts of the stacker, which will not be specifically limited here.

Therefore, by mounting the limiting devices corresponding to the extreme positions in front of the stacker drive apparatus in the travelling direction, when the travelling mechanism travels to a left or right extreme position, the mechanical limits mounted at the front and rear ends of one respective track of the ground tracks can achieve buffer by collision of the stacker with the mechanical limits in the event of the travelling mechanism of the stacker losing control of speed, thereby preventing the stacker from rushing out of the stocker, and achieving the purpose of protecting the stacker and equipment.

Moreover, when the travelling mechanism of the stacker travels close to the left extreme position or is located in a left maintenance position, the base of the stacker (or a mechanism directly in contact with the anticollision block on the base of the stacker) first presses the buffer block of the limiting device, causing elastic deformation of the buffer block. The elastic deformation of the buffer block prevents the travelling mechanism from lifting off the tracks due to inertia during emergency braking, thereby improving the safety of the travelling mechanism of the stacker.

In some embodiments, positioning elements may be arranged on the tracks to meet the requirement of high-accuracy operation of the stacker, thereby achieving high-accuracy positioning of tracks, the travelling mechanism, or the like using the positioning elements.

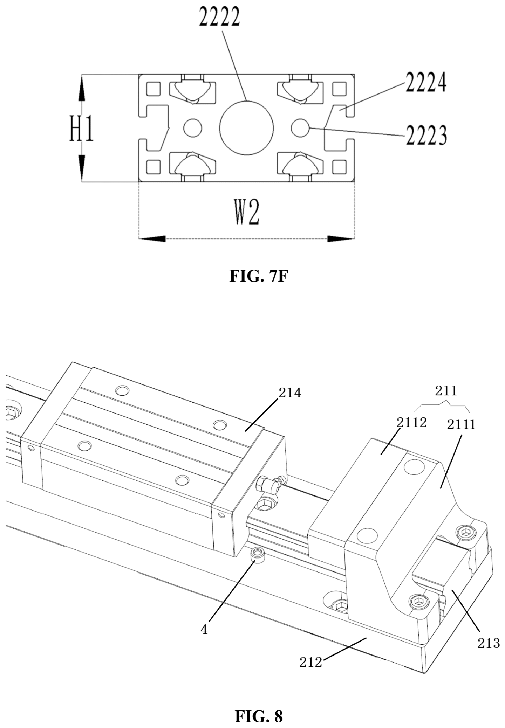

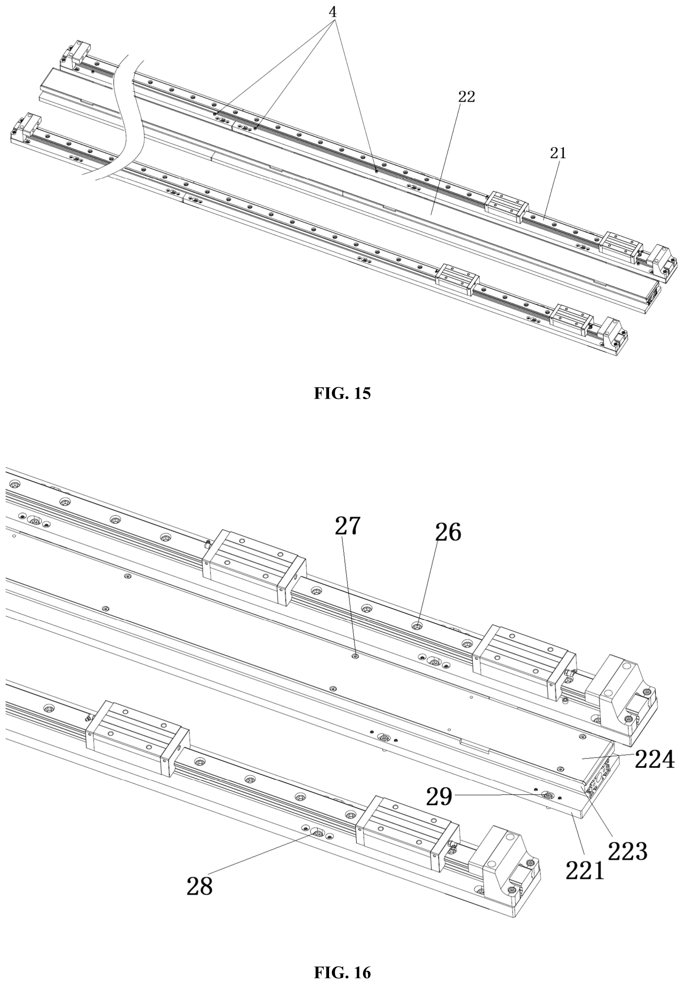

In some embodiments, referring to FIGS. 15 and 8, each guide track of the two guide tracks 21 further includes a plurality of first positioning elements 4 arranged on the first fixing plate 212 at preset intervals. The plurality of first positioning elements 4 are configured to determine positions of the stacker 5 during the horizonal movement of the stacker to prevent the movement displacement from exceeding a first preset threshold.

In practice, corresponding positioning elements may be arranged at specific positions where the stacker stays, so that when the stacker moves to a specific position, the stacker can be positioned with high accuracy using the positioning elements.

In some embodiments, each guide track of the two guide tracks 21 may further include a plurality of second positioning elements arranged on the first fixing plate 212 at preset intervals. The plurality of second positioning elements are configured to determine a mounting position of the first fixing plate 212 during mounting the first fixing plate 212 to the bottom of the aisle to prevent a mounting error of the first fixing plate from exceeding the second preset threshold.

In practice, one of the two guide tracks 21 may be mounted first during mounting, and high-accuracy mounting can be achieved using the positioning function provided by the second positioning elements. During mounting the other one of the two guide tracks 21, the positioning function of the second positioning elements can further ensure the mounting accuracy of the guide track.

When using the second positioning elements to improve the accuracy of mounting positions of the guide tracks 21, the second positioning elements may cooperate with a mounting apparatus, or the second positioning elements that are arranged on the two guide tracks 21 respectively may cooperate with each other. For example, when mounting a first guide track, the second positioning elements on the first guide track may cooperate with an external high-accuracy mounting apparatus. When mounting a second guide track, a very high alignment accuracy can be achieved between the two guide tracks based on the cooperation of the second positioning elements arranged on the two guide tracks.

In some embodiments, the plurality of first positioning elements may be designed in the form of positioning pins as high-accuracy positioning components, which can determine the position of the stacker when the stacker reaches a specific position, thereby preventing affecting the operational accuracy of the stacker due to errors or the like during operation. It should be noted that the plurality of first positioning elements may also be designed as other positioning devices that can achieve positioning, such as sensing devices, and will not be further specified here.

In some embodiments, the plurality of second positioning elements may be designed in the form of sensing devices, such as light sensing components, as a high-accuracy positioning components, so as to ensure high-accuracy mounting using high-accuracy positioning during mounting the guide tracks. For example, the mounting accuracy of the tracks is affected due to relatively great mounting errors, thereby affecting the high-accuracy operation of the stacker.

In some embodiments, the above-mentioned first positioning elements and second positioning elements may be a same type of positioning elements, that is, one positioning element can provide the positioning functions of a first positioning element and the positioning functions of a second positioning element.

In some embodiments, the travelling track may also use a multi-layer mounting structure similar to that for the guide tracks. The travelling track is an important track for supporting the travelling wheel of the stacker, and therefore shall have a structure with more layers.

In some embodiments, the travelling track adopts a two-layer structure. According to the actual production requirements of the tracks, the travelling track is located between two guide tracks and is parallel to the guide tracks, and the travelling track is spaced from the two guide tracks by a specified distance, respectively. Firstly, to meet the above requirements, the fixing plate with a plate-like structure is connected to the bottom of the aisle, so that the travelling track has a relatively high initial mounting accuracy. Then, the support plate is arranged on the fixing plate as the second-layer structure using fasteners. The support plate provides direct contact support for the travelling wheel in the base of the stacker during horizontal movement.

In some embodiments, the travelling track adopts a three-layer structure. On the basis of the above-mentioned two-layer structure, considering the stable support for the horizontal movement of a heavy stacker, a profile layer is added between the fixing plate layer at the bottom and the support plate layer at the top. Due to the great weight of the stacker and the hard connection between the layers of the travelling track using fasteners, when the travelling wheel in the base of the stacker travels on the travelling track, the travelling track will vibrate due to resonance. The profile layer, due to its special cross-sectional structure, provides a shock-absorbing function to the travelling track, thereby improving the stability of the stacker during operation.

In some embodiments, the travelling track adopts a four-layer structure, and each layer of the four-layer structure is designed to have specific functionality. For example, the fixing plate located at the bottom provides a relatively high initial accuracy to the overall track by using a plate-like structure as a basis plate of the overall track; a second layer configured for shock absorption during travelling may be arranged between the first and third layers; the fourth layer located at the top may be configured to contact with the travelling wheel and to provide a good and high-accuracy contact surface for the travelling wheel, in order to improve travelling accuracy; and the third layer is configured to support and facilitate mounting and adjustment of the fourth layer, thereby ensuring high mounting accuracy of the fourth layer.

Regarding the design of the travelling track, the following embodiments are provided for illustration.

In some embodiments, referring to FIGS. 1 to 6 and 7A to 7E, the travelling track 22 includes a second fixing plate 221, a profile 222, a support plate 223 and a contact layer 224. The second fixing plate 221 is configured to be fixedly mounted on the bottom of the aisle, the profile 222 is arranged between the second fixing plate 221 and the support plate 223, and the contact layer 224 is arranged on the support plate 223.

In practice, the second fixing plate 221, as a basis plate, is fixed in the aisle, thereby providing high initial mounting accuracy to the travelling track. In some embodiments, the profile 222 may be an aluminum profile part, thereby providing shock absorption effects utilizing the characteristics of aluminum material. In addition, the characteristic of light weight of the aluminum material can also be utilized. The profile 222 of aluminum alloy shock absorption mechanism can also achieve lightweight design of the tracks. Moreover, aluminum is a commonly used product that is very convenient for procurement, processing, mounting, and use, thereby facilitating production and processing. The support plate 223 provides good support to the contact layer 224, and further provides, based on the profile 222, better characteristics such as stability, accuracy, and the like to the contact layer 224. The contact layer 224 located at the top is configured to contact with the travelling wheel in the base of the stacker and to provide support to the horizontal movement of the base of the stacker. In practice, by arranging on the support plate 223, the plate material having corresponding contact characteristics can be selected according to the travelling requirements of the travelling wheel of the stacker. For example, when the travelling wheel is a polyurethane travelling wheel, the plate material for the contact layer 224 may be selected such that a top surface of the plate material is suitable for smooth movement of the travelling wheel of polyurethane, thereby providing a high-accuracy and dust-free contact travelling track for the travelling wheel.

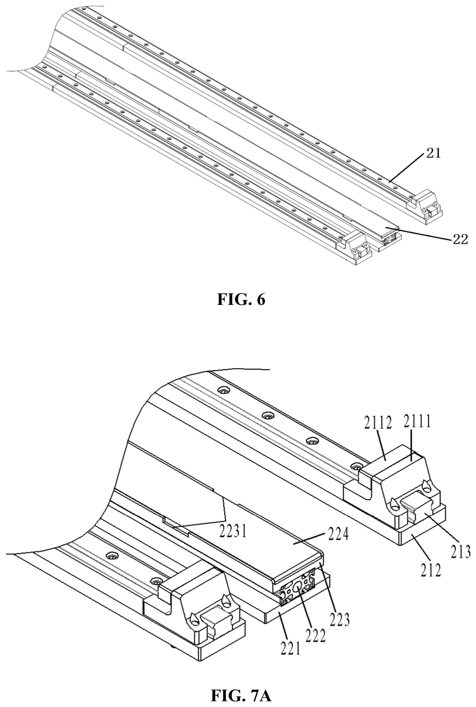

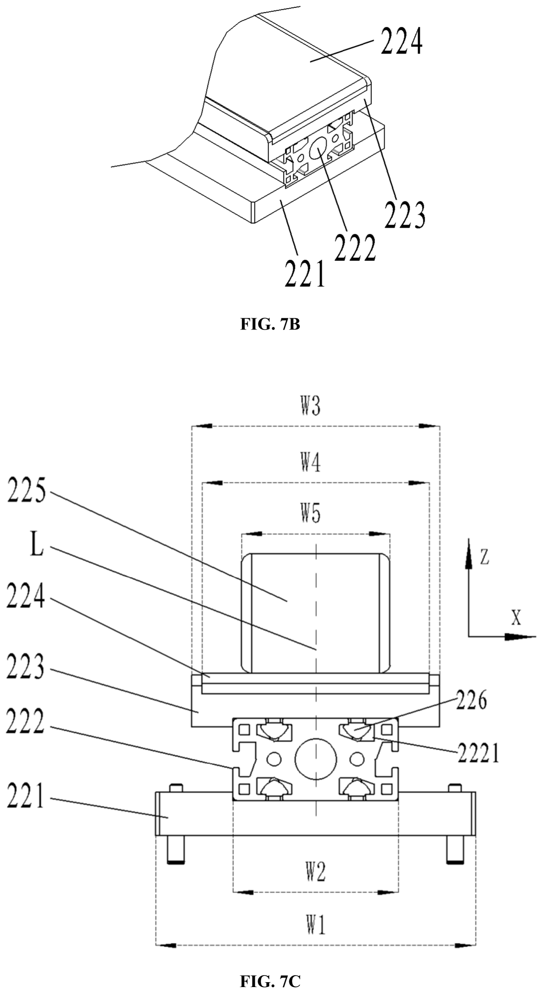

In some embodiments, as shown in FIG. 7C or 7F, a width of the cross-section of the profile 222 is denoted as W2, and the height is denoted as H1. Then, the cross-section of the profile 222 meets the following relationship: H1 < W2. The height direction of the profile 222 refers to the Z-axis direction in FIG. 7C.

In some embodiments, in order to achieve lightweight design and shock absorption effect for the profile, as shown in FIG. 7C or 7F, a first through hole 2222 is defined on the profile 222, the first through hole passes through the profile along the length direction of the profile, and the first through hole 2222 is defined at a center of the cross-section of the profile 222. In some embodiments, an axis of the first through hole is collinear with an axis of the cross-section of the profile. A diameter of the first through hole 2222 is denoted as d1, and the diameter meets the following relationship: d1 ≤ 0.5 * H1. The length direction of the profile 222 refers to the direction perpendicular to the X-axis direction and the Z-axis direction in FIG. 7C.

In some embodiments, in order to achieve lightweight design and shock absorption effect for the profile, as shown in FIG. 7C or 7F, in addition to the first through hole 2222 of the profile 222, a plurality of second through holes 2223 are defined on the profile 222. The plurality of second through holes 2223 are defined to surround the first through hole 2222 and space from the first through hole 2222 along a width direction of the profile. A diameter of one respective second through hole of the plurality of second through holes 2223 is denoted as d2, and the diameter meets the following relationship: d2 ≤ 0.4 * d1.

In some embodiments, in order to achieve lightweight design and shock absorption effect for the profile, as shown in FIG. 7C or 7F, in addition to the first through hole 2222 and the plurality of second through holes 2223 of the profile 222, side grooves 2224 are defined on both sides of the cross-section of the profile 222 along the width direction of the profile 222. The width direction of the profile 222 refers to the X-axis direction in FIG. 7C. In practice, the travelling track 22 is mounted between the guide tracks. Because the guide tracks guide the travelling mechanism, and the travelling track is the supporting track for the travelling mechanism during travelling, this arrangement can ensure that the forces applied on the drive portion are even during movement, thereby ensuring the smoothness of the travelling mechanism during travelling, grasping and placement.

Some improvement designs may be made to the multi-layer connection structure of the travelling track, in order to improve the production performance such as mounting convenience, accuracy, and reliability of the connection structure.

In some embodiments, referring to FIGS. 1 to 6 and 7A to 7E, a first groove is defined on a top surface of the second fixing plate 221, a second groove is defined on a bottom surface of the support plate 223, and a third groove is defined on a top surface of the support plate 223, such that the profile 222 may be embedded in the first and second grooves respectively, and the contact layer 224 may be embedded in the third groove.

In this way, the design of corresponding mounting grooves can facilitate mounting and can improve mounting accuracy based on the high machining accuracy of the grooves.

In some embodiments, referring to FIGS. 1 to 6 and 7A to 7E, a plurality of mounting grooves 2221 are defined on the profile 222, and each mounting groove of the plurality of mounting grooves is configured to receive a respective plurality of nuts 226. A respective cross-section of each mounting groove of the plurality of mounting grooves 2221 has an opening and a groove bottom, and a width of the opening is less than a width of the groove bottom. In the respective cross-section, the groove bottom includes a sloping surface and a horizontal surface, such that the respective plurality of nuts 226 can enter the corresponding mounting groove 2221 from the opening along a direction facing towards the horizontal surface. In some embodiments, the respective plurality of nuts 226 are elastic nuts.

Therefore, with the plurality of mounting grooves 2221 defined on the profile 222, after the profile 222 is embedded into the above-mentioned first and second grooves respectively, each nut of the respective plurality of nuts 226 in each mounting groove 2221 engages with a corresponding bolt (not shown in the drawings) passing through the support plate 223 or through the second fixing plate 221 to tightly fix the profile 222 to the support plate 223 or to the second fixing plate 221. Because of the plurality of mounting grooves 2221, the respective plurality of nuts 226 can be easily inserted into each mounting groove 2221 during mounting. The corresponding bolts pass through a plurality of counterbores on the second fixing plate 221 or on the support plate 223 to engage with the respective plurality of nuts 226, thereby tightly fixing and mounting the profile 222 to the second fixing plate 221 and to the support plate 223.

In some embodiments, referring to FIG. 7C, the profile 222 is embedded into the first and second grooves respectively, then the first groove and the second groove clamp an upper portion and a lower portion of the profile 222, respectively. When the profile 222 is subjected to a force from the travelling wheel 225, the first and second grooves can ensure that the profile 222 will not slide relative to the second fixing plate 221 or to the support plate 223 along the X direction.

In some embodiments, as shown in FIG. 7C, when the travelling wheel 225 is located above a cross-section of the profile 222, and a centerline L of the travelling wheel 225 along the Z direction is collinear with a centerline L of the cross-section of the profile 225 along the Z direction, the travelling track 22 is in an optimal support state for the travelling wheel 225.

In some embodiments, referring to FIG. 7C, the design of the grooves configured for mounting are further optimized. Specifically, the above-mentioned third groove has a width greater than a width of the second groove. In this way, not only the support plate 223 can be maintained to have good support structure characteristics, but also the shock absorption function of the profile 222 can be utilized after the profile 222 is embedded in the second groove, thereby further improving the stability characteristics of the support plate 223.

In practice, the third groove on the support plate 223 may have a width slightly greater than a width of the contact layer 224, making it convenient for the contact layer 224 to be placed in the third groove of the support plate 223. After the contact layer 224 is placed in the third groove, a gap is left in the width direction, making it easy for slight adjustment of the contact layer 224 using the gap during mounting, which is conducive to improving mounting accuracy.

In some embodiments, referring to FIGS. 1 to 6 and 7A, gaps 2231 are defined on both sides of the third groove of the support plate 223 at intervals along the length direction of the third groove, in order to arrange and remove the contact layer 224 through the gaps 2231. Moreover, the gaps are conducive to slight adjustment of a position of the contact layer 224 during mounting.

In some embodiments, in a case where one respective track is relatively long, each layer of the one respective track may be designed to have a segmented structure, and joints of two adjacent layers misalign with one another, respectively. In this way, overall accuracy of the tracks can be prevented from being affected due to excessive deformation resulted from the stress applied at the joints.

Referring to FIGS. 5 and 7A to 7E, each of the second fixing plate 221, the profile 222, the support plate 223, and the contact layer 224 has a respective segmented structure that includes a plurality of segments assembled together, i.e. the second fixing plate 221 may have a relatively long structure formed by a plurality of fixing plate structures that are end-to-end assembled. Each of other layers also adopts a respective end-to-end assembled structure.

In some embodiments, joints of one layer of the travelling track 22, as an important track for supporting the travelling of the travelling wheel of the stacker, may be arranged to misalign with joints of another layer of the travelling track, respectively. For example, joints of the second fixing plate 221 are arranged to misalign with joints of the profile 222, the joints of the profile 222 are arranged to misalign with joints of the support plate 223, the joints of the support plate 223 are arranged to misalign with joints of the contact layer 224, respectively. Or, the joints of the second fixing plate 221, the joints of the profile 222, the joints of the support plate 223, and the joints of the contact layer 224 misalign with one another, respectively. Other layers may be similar to the second fixing plate 221, which will not be described in detail here.

By designing the fixing structure of each layer to the assembled structure, it not only facilitates mounting, but also facilitates subsequent maintenance, and further enables slight adjustments along the width and length directions when mounting each layer, thereby improving mounting accuracy.

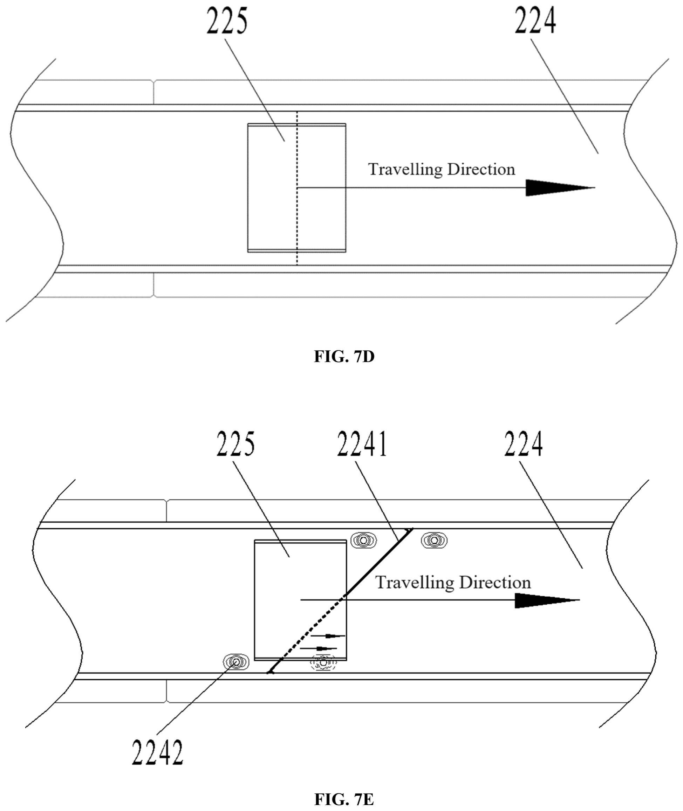

As an example, in the traditional solution shown in FIG. 7D, the joints are usually formed by assembling right-angle surfaces that are perpendicular to the travelling direction. Although it is conducive to the processing of plate materials, in the application of the stacker, the travelling wheel 225 is prone to generate relatively great stress on the joints of assembled right-angle surfaces. During long-term operation, the gaps at the joints of assembled right-angle surfaces may become larger and larger. Therefore, when the travelling wheel 225 passes through the gaps, a small amount of debris, noise, or the like may be generated, which may affect the long-term operation of the stacker on the ground tracks.

Therefore, considering that the contact layer 224 needs to be in direct contact with the travelling wheel 225, special improvement designs are made to the joints of the contact layer 224, i.e. assembled beveled surfaces are adopted.

Referring to FIG. 7E, compared with the assembled right-angle surfaces in FIG. 7D, due to the fact that the travelling wheel 225 applies a force on only a part, i.e. a contact area, of a joint 2241 obtained by assembling beveled surfaces, the tight joint characteristics between the beveled surfaces can be maintained better, which is more conducive to the travelling of the travelling wheel 225. It is not easy to produce debris, noise, or the like, and is also conducive to long-term operation and to ensuring the track accuracy during long-term operation, thereby improving the safety and reliability of long-term operation.

In some embodiments, one respective joint of the joints of the contact layer 224 has the structure of assembled beveled surfaces, each beveled surface of the beveled surfaces forms a sharp angle with the travelling direction, and the sharp angle ranges from 10° to 80°.

In some embodiments, the value of the sharp angle may be 45°, which is conducive to production and processing, as well as to flexible mounting and easy replacement during maintenance.

In some embodiments, the sharp angle may range from 25° to 35°, such as 25°, 30°, 35°, or may range from 40° to 50°, such as 40°, 42°, 44°, 45°, 46°, 47°, 48°, 50°, or may range from 55° to 65°, such as 55°, 58°, 60°, 62°, 65°, which is conducive to production and processing, as well as to flexible mounting and easy replacement during maintenance.

In some embodiments, the accuracy of the travelling track may be improved by adjusting gaskets, thereby ensuring that the error between the travelling track and the guide tracks can reach an accuracy level of 0.1mm, and therefore meeting the high-accuracy operation requirements of the stacker.

In some embodiments, the track apparatus for the stackers for the stocker further includes a plurality of second adjustment gaskets arranged in gaps between the travelling track and the mounting plate in the aisle, in order to provide a preset distance and an alignment degree between the travelling track and the mounting plate.

In practice, the details of the plurality of second adjustment gaskets may refer to the plurality of first adjustment gaskets illustrated above, and will not be illustrated in detail here.

It should be noted that the function of the adjustment gaskets is to adjust the flatness of the entire tracks (such as the aforementioned guide tracks, travelling track, etc.). In addition, when the travelling wheel mechanism of the stacker has a certain degree of elasticity, there is no need to add the adjustment gaskets to the travelling track.

In some embodiments, due to the requirement of high-accuracy tracks for the stacker, the travelling track and the guide tracks of the ground tracks may be high-accuracy and dust-free straight tracks, and may be long tracks obtained by assembling a plurality of tracks end-to-end.

In some embodiments, each track has a segmented structure, and each segment of the segmented structure is installed and positioned using respective bolts. In this way, mounting, trial run and maintain can be facilitated, and when mounting the ground tracks inside the stocker, the accuracy of each segment of the tracks can be improved. Therefore, during the operation of the stacker, the relative vibration between the ground tracks and the stocker can be reduced, and generation of noise can be prevented.

In some embodiments, the surface of the travelling track may be made of polyurethane which is suitable for smooth travelling of the travelling wheel, thereby further improving travelling accuracy. Each track may be fixed using press bolts.

Referring to FIG. 16, the first track 213 of one respective guide track is fixed using first fasteners 26, the first fixing plate 212 of the one respective guide track is fixed using second fasteners 28, the second fixing plate 221 of the travelling track is fixed using third fasteners 29, and the contact layer 224 is fixed using fourth fasteners 27. It should be noted that the various fasteners used for fastening may be screws or bolts with corresponding specifications selected according to actual needs, and will not be specifically limited here. For example, high-strength bolts of grade 12.9 or other fixing devices may be used to fix the first fixing plate 212 on a reference surface.

In some embodiments, for the accuracy requirements of the stacker for the tracks, corresponding slight adjustment structures may be provided to each track of the ground tracks, so that during mounting, high-accuracy slight adjustment can be achieved using the slight adjustment structures according to the actual mounting accuracy and the used target values of high-accuracy designs.

In practice, the guide tracks 21 of the ground tracks are used in pairs. The straight tracks (see the first tracks 213 as shown in FIG. 7A) are placed on the reference surface and fixed to the reference surface using high-strength bolts of grade 12.9 or other fixing devices. In this way, the positions and orientations of the tracks can be ensured to be correct during mounting, and deviation or distortion can be prevented, thereby ensuring high-accuracy characteristics.

Regarding the accuracy of other tracks of the ground tracks, the reference for positioning and accuracy adjustment during mounting the guide tracks may be based on a guide track that is already mounted. Specifically, one guide track that is already mounted with high accuracy may be used as the reference for the mounting and accuracy adjustment of the other guide track. In this way, high-accuracy mounting of the guide tracks can be achieved, thereby ensuring that the drive mechanisms (such as the sliding seats) of the guide tracks can slide smoothly. The reference for mounting and adjustment of the travelling tracks may also be based on one or two guide tracks that are already mounted with high accuracy. Therefore, during mounting of the ground tracks, one guide track may be mounted with high accuracy first, then the second guide track is mounted with high accuracy, and finally the travelling track is mounted with high accuracy between the two already mounted guide tracks.

In some embodiments, for the requirements of high-accuracy mounting, a plurality of first counterbored slots (see the counterbore at the second fastener 28 shown in FIG. 16) may be defined on the first fixing plate 212. In this way, the plurality of first counterbored slots may be used for fixedly mounting the first fixing plate 212 on the bottom of the aisle, and for adjustment of a position of the first fixing plate during mounting. It should be noted that the counterbored slots may be used not only to improve mounting accuracy during mounting the guide track as an accuracy reference, but also to slightly adjust the position of the other guide track relative to the reference track with the aid of corresponding counterbored slots during mounting when reference is made to the already mounted reference guide track, thereby ensuring the high accuracy characteristics between the precedently mounted track and the subsequently mounted tracks.

Similarly, a plurality of second counterbored slots (see the counterbore at the first fastener 26 shown in FIG. 16) may be defined on the first track 213. In this way, the plurality of second counterbored slots may be used for fixedly mounting the first track 213 to the first fixing plate 212 using at least one fastening screw (i.e. the first fastener 26), and for high-accuracy mounting and slight adjustment of a relative position between the first track 213 and the first fixing plate 212 during mounting.

Similarly, a plurality of third counterbored slots (see the counterbore at the fourth fastener 27 shown in FIG. 16) may be defined on the contact layer 224. In this way, the plurality of third counterbored slots may be used for fixing the contact layer 224 to the support plate 223 using screws through the plurality of third counterbored slots, and for adjustment of a horizonal relative position between the contact layer 224 and the support plate 223 during fixing using screws. With the slight adjustment, a higher alignment accuracy between the contact layer 224 and the support plate 223 can be achieved, which ensures the high accuracy characteristics between the travelling track and the guide tracks, thereby providing high-accuracy and stable performance of the ground tracks to the long-term operation of the stacker on the tracks.

Similarly, a plurality of fourth counterbored slots (see the counterbore at the third fastener 29 shown in FIG. 16) may be defined on the second fixing plate 221. In this way, the plurality of fourth counterbored slots may be used for fixing the second fixing plate 221 on the bottom of the aisle using screws through the plurality of fourth counterbored slots, and for adjustment of a horizonal relative position between the second fixing plate 221 and the guide tracks 21 during fixing using screws, thereby ensuring the high accuracy characteristics between the travelling track and the guide tracks, and providing high-accuracy and stable performance of the ground tracks to the long-term operation of the stacker on the tracks.

It should be noted that the counterbored slots used for mounting the layers mentioned above may be distributed close to the lateral sides of each layer. In this way, the areas near the lateral sides of each layer can be reasonably used to define the counterbores, and each layer can have reasonable dimensions in width as much as possible.

For example, the plurality of third counterbored slots (see the counterbore at the fourth fastener 27 shown in FIG. 16) are distributed at the lateral sides of the contact layer 224. Therefore, the contact layer 224 can be tightly fixed and connected to the support plate 223 through the plurality of third counterbored slots. During the fixed connection of the contact layer 224 to the support plate 223, the plurality of third counterbored slots can be further used for slight adjustment, thereby achieving high-accuracy fixed connection.

Similarly, the plurality of fourth counterbored slots (see the counterbore at the third fastener 29 shown in FIG. 16) are distributed at the lateral sides of the second fixing plate 221. Therefore, the second fixing plate 221 can be tightly connected in the aisle through the plurality of fourth counterbored slots. During fixedly mounting the second fixing plate 221 in the aisle, the plurality of fourth counterbored slots can be further used for slight adjustment, thereby achieving high-accuracy fixed mounting.

In some embodiments, a respective width of each layer of the travelling track is optimized and improved, so that each layer can have good structural characteristics, and can provide better performance to the travelling track, the processing and mounting of the structures can be facilitated, and the accuracy of the travelling track can be improved, thereby providing good guarantee for the long-term operation of the track.

Referring to FIGS. 7A to 7E, in conjunction with FIG. 16 that shows the design of the counterbores, when the plurality of third counterbored slots are defined on the two lateral sides of the contact layer 224, the contact layer 224 has a width greater than or equal to a sum of a width of the travelling wheel 225 in an axial direction of the travelling wheel and a width of at least one respective third counterbored slot of the plurality of third counterbored slots.

For example, the width of the contact layer 224 is denoted as W4, the width of the travelling wheel 225 is denoted as W5, and the width (usually also may be a size of a head of a screw used in the counterbore) of one respective third counterbored slot is denoted as Wx1, the following relationship is met: W4 ≥ W5+Wx1.

When considering the contact between the travelling wheel 225 and the contact layer 224, the width of the contact layer 224 may be slightly wider than that in the above relationship, for example, W4 ≥ W5+2×Wx1, such that the travelling wheel 225 is less likely to come into contact with the edges of the counterbores.

Referring to FIGS. 7A to 7E, in conjunction with FIG. 16 that shows the design of the counterbores, the support plate 223 has a width slightly greater than the width of the contact layer 224, in order to leave corresponding structural width for a reserved structure, such as the edges of the third groove reserved in the example illustrated above and/or the adjustment gaps structure used for slight adjustment. In this case, the width of the support plate 223 is not less than (i.e. greater than or equal to) a sum of the width of the contact layer 224 and the width of the reserved structure. In practice, the width of the support plate 223 may be slightly greater than the sum.

For example, the width of the support plate 223 is denoted as W3, and the width of the reserved structure on each side is denoted as Wx2, the following relationship is met: W3 ≥ W4+2×Wx2.

Referring to FIGS. 7A to 7E, in conjunction with FIG. 16 that shows the design of the counterbores, when the plurality of fourth counterbored slots are defined on two sides of the second fixing plate 221, the second fixing plate 221 has a width greater than or equal to a sum of the width of the support plate 223 and a width of at least one respective fourth counterbored slot of the plurality of fourth counterbored slots, in order to facilitate the mounting, trial run and adjustment of each layer of the travelling track.

For example, the width of the second fixing plate 221 is denoted as W1, and the width (usually also may be a size of a head of a screw used in the counterbore) of one respective fourth counterbored slot is denoted as Wx3, the following relationship is met: W1 ≥ W3+2×Wx3.

Referring to FIGS. 7A to 7E, in conjunction with FIG. 16 that shows the design of the counterbores, the profile 222 has a width greater than the width of the travelling wheel 225 in the axial direction. In this way, the profile 222 can provide better shock absorption effect, which is conducive to reduction of noise generated between the travelling wheel 225 and the contact layer 224, as well as improvement of the stability of travelling, thereby ensuring high-accuracy characteristics of travelling.

For example, the width of the profile 222 is denoted as W2, the following relationship is met: W2 ≥ W5.

When considering the shock absorption effect on the stress generated by the contact between the travelling wheel 225 and the contact layer 224, the width of the profile 222 may be slightly wider than that in the above relationship, for example, W2 > W5+Wx1, such that the stress impact from the travelling wheel 225 on the track during travelling can be further reduced by the shock-absorbing effect of the profile 222. In this way, the characteristics such as stability and high accuracy of the track can be improved during long-term operation, and the safety and reliability of the track also can be improved during long-term operation.

In some embodiments, the high-accuracy guide of the stacker is achieved by the overhead track in combination with the ground tracks, since the overhead track also adopts high-accuracy and dust-free tracks.

In some embodiments, referring to FIGS. 1 to 12, the overhead track 1 includes a single track 12 constituted of a plurality of end-to-end connected rails, the stacker has a guide wheel assembly 51 that is arranged on both sides of the single track 12 and has a plurality of guide wheels, each guide wheel of the plurality of guide wheels of the guide wheel assembly 51 is configured to moveably contact with a respective lateral surface of the single track 12. With the limit from the single track 12 and the guide wheel assembly 51, the stacker 5 can be effectively prevented from tilting.

In practice, the overhead track may be a long single track formed by assembling square tubes that have the same size and are parallel to each other. Adjacent square tubes are fastened and connected using at least one fixing part 13, and the square tubes are suspended by suspending parts 14. For example, the suspending parts 14 are horizontally mounted on the top of the stocker using a suspending beam, and are fixed using nuts, such that the overhead rail is fixedly connected to the top of the stocker.

In some embodiments, both ends of the square tube track are provided with mechanical hard limits to prevent the stacker from rushing out of the square-tube track in the case of loss of control.

Referring to FIGS. 1 to 12, each end of two ends of the single track of the overhead track is provided with a respective second limiting device 11 including a second anticollision block 111 and a second buffer block 112. The second anticollision block 111 is fixedly mounted on the single track, the second buffer block 112 is mounted on the second anticollision block 111, and the second buffer block 112 is configured to elastically deform to buffer inertia in a collision in response to the stacker colliding with the respective second limiting device.

It should be noted that the stacker may collide with the second buffer block at the guide wheel assembly (for example at a guide wheel) or at other parts of the stacker, which will not be specifically limited here.

In some embodiments, a barcode device may be arranged between the stacker and the ground tracks. For example, a side of the travelling mechanism of the stacker is equipped with a barcode reader, and a ground track (or an outer side of a ground track) is equipped with a plurality of barcodes. During operation of the stacker, the barcode reader can scan the plurality of barcodes to provide real-time feedback on the current travelling position of the stacker, thereby achieving high-accuracy travelling displacement positioning and control.

Usage of the barcode device and of the identification and positioning by scanning the plurality of barcodes has the advantages of reliability and high recognition efficiency, ensuring the accuracy of the horizontal travelling direction of the stacker.

In some embodiments, a stacker system includes the track apparatus as illustrated above and the stacker. The stacker includes the travelling box 100 (i.e. the base), the support seat 203 and the travelling wheel 201 mounted on the support seat 203. One end of the support seat 203 is rotatably hinged on the travelling box 100, the other end of the support seat 203 is coupled to the travelling box 100 via an elastic assembly 204 elastically deformable at least in a vertical direction. The elastic assembly may be mounted on a horizontal surface of the other end of the support seat 203 vertically or at a certain inclination angle relative to the vertical direction. At least a portion of the support seat 203 is arranged in the travelling box 100. The support seat 203 may be completely arranged inside the travelling box 100, or may partially protrude from the through space and from the upper surface of the travelling box 100. The travelling wheel 201 passes through the through space and is arranged on an elastic layer of the travelling track 22, and the vertical movement of the travelling wheel 201 during operation is in the through space.

The travelling track includes a second fixing plate fixedly mounted on the bottom of the aisle and at least one layer arranged on the second fixing plate. The at least one layer includes the elastic layer having elastic characteristics, and the elastic layer and the elastic assembly are configured to absorb or suppress vibration transmitted by the travelling wheel together or individually. For example, the layer of the travelling track 22 in contact with the travelling wheel 201 is the elastic layer. When the travelling track 22 has two or three layers, the upper support plate 223 may be designed to have certain elastic characteristics. When the travelling track 22 has four layers, the upper contact layer 224 may be designed to have certain elastic characteristics, as shown in FIGS. 7A to 7E and 16. The elastic characteristics refer to the ability of elastic deformation of at least one layer of the travelling track when the stacker travels on the travelling track, that is, the compressible characteristics in the vertical direction.

When the travelling track 22 deforms due to long-term use, assembly, or other abnormalities, that is, there is an upward convex or concave abnormality in the vertical direction, the elastic assembly 204 and the elastic layer of the travelling track 22 can absorb or suppress the vibration transmitted by the travelling wheel 201 together or individually. For example, when the travelling wheel 201 runs on a certain section of the travelling track 22 that has abnormal convex deformation, the travelling wheel 201 is lifted up by the convex section (the travelling wheel 201 moves vertically in the through space), the elastic assembly 204 undergoes compression deformation in the vertical direction, and the elastic layer is compressed downward relative to the normal state. The compression deformation of the elastic assembly 204 and the elastic layer together offsets or absorbs the vertical movement (abnormal movement) of the travelling wheel 201 relative to the normal state, thereby alleviating or eliminating the vibration generated or transmitted by the travelling wheel 201 running on the deformed section of the travelling track 22. When the elastic layer of the travelling track 22 attenuates its deformation ability due to long-term use, the elastic assembly 204 can independently absorb the vibration transmitted by the travelling wheel 201 using compression deformation. When the travelling wheel 201 runs on a certain section of the travelling track 22 with abnormal concave deformation, during the falling process of the travelling wheel 201 over the concave section, the elastic assembly 204 is free of the pre-tension force that is applied to the elastic assembly body 2042 of the elastic assembly 204 in response to the travelling wheel 201 abutting against the normal sections of the track, and generates elongation deformation to make the travelling wheel to press against the travelling track 22 and continue frictional operation on the travelling track 22. When the elastic assembly 204 and the elastic layer absorb the variation of the travelling wheel 201 together or individually, the vibration transmitted by the travelling wheel 201 can be suppressed.

When the travelling track 22 having the multi-layer structure includes the support plate 223, the support plate 223 may be designed to have certain elastic characteristics, and the support plate and the elastic assembly are configured to absorb or suppress vibrations transmitted by the travelling wheels together or individually. When the travelling track 22 having the multi-layer structure includes the profile 222, and the profile 222 having a plurality of through holes in the cross-section is embedded in the first groove and the second groove, during travelling of the travelling wheel 201 along the travelling track 22, the elastic assembly 204 and the profile 222 are configured to absorb or suppress vibrations transmitted by the travelling wheels 201 together or individually. When the travelling track 22 having the multi-layer structure includes the profile 222 and the contact layer (the contact layer is the elastically deformable elastic layer), and the profile 222 having a plurality of through holes in the cross-section is embedded in the first groove and the second groove, during travelling of the travelling wheel 201 along the travelling track 22, the elastic assembly 204, the elastic layer and the profile 222 are configured to absorb or suppress vibrations transmitted by the travelling wheels 201 together or individually. However, the structure of the travelling track is not limited to this example. When the travelling track 22 having the multi-layer structure includes the profile 222 and the support plate 223, and the profile 222 has elastic characteristics, the support plate 223 may have certain elastic characteristics or not.

In some embodiments, referring to FIGS. 17 and 18, a respective through hole is defined on each of a top of and the bottom of the travelling box 100 to form the through space. The through space is configured to allow vertical movements of the travelling wheel 201 relative to the travelling box 100. The Y-axis direction refers to the length direction of the travelling track 22.

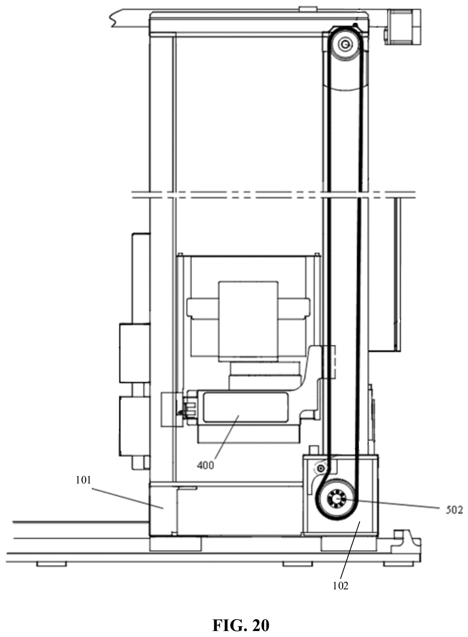

In some embodiments, referring to FIGS. 1 and 20, the stacker further includes at least two sets of columns 301 and 302 that are fixed on a top of the travelling box 100, extend along the Y-axis direction, and form a vertical movement passage 303. Each set of the at least two sets of columns includes at least two columns arranged at two ends of the top of the travelling box 100 along the X-axis direction, respectively. The first track 213 is provided with at least two sliding seats 214 slidably matched with the first track 213, and the at least two sliding seats 214 are arranged at two ends of the bottom of the travelling box 100 along the Y-axis direction, respectively. A projection of one respective column of the at least two columns along the Z-axis direction at least partially overlaps with a projection of a vertically corresponding sliding seat of the at least two sliding seats 214 along the Z-axis direction. When a lifting box 400 runs in the vertical movement passage formed by the columns, the columns will superimpose the gravity of the lifting box 400 downwards and act on the lifting box 400 via the fixed points between the columns and a top of the lifting box 400. When a projection of a column along the Z-axis direction and a projection of a corresponding sliding seat along the Z-axis direction at least partially overlaps, the deformation of the column of the travelling box 100 at the corresponding force application point can be alleviated. The Y-axis direction represents the length direction of the travelling track, the X-axis direction is orthogonal to the Y-axis direction in a horizontal plane, and the Z-axis direction is orthogonal to the Y-axis direction in a vertical plane.

In some embodiments, as shown in FIGS. 17 to 20, the travelling box 100 includes a first box portion 101 and a second box portion 102 arranged along the Y-axis direction, and the stacker further includes the lifting box 400 configured to move along the vertical movement passage 303. A respective through hole is defined on each of a top of and the bottom of the first box portion to form a through space. Two baffles are arranged in the second box portion and arranged to space from each other along the X-axis direction, a first mounting space is formed between the two baffles, a second mounting space and a third mounting space are formed on outer sides of the two baffles, respectively, and each of the second mounting space and the third mounting space is recessed towards the first mounting space. Drive wheels 502 are arranged in the second mounting space and the third mounting space, respectively. A power mechanism is arranged in the first mounting space and is configured to drive the drive wheels 502 to rotate.

In the present disclosure, the same and similar parts between various embodiments may be referred to each other, and each embodiment focuses on the differences from other embodiments. Especially for the embodiments described later, the description is relatively simple. For relevant details, reference may be made to the description of the preceding embodiments.

In the embodiments of the present disclosure, technical terms such as "first" and "second" are only used to distinguish different objects and shall not be understood as indicating or implying relative importance or implying the quantity, specific order, or primary secondary relationship of the indicated technical features. In the embodiments of the present disclosure, the meaning of "a plurality of" refers to two or more (including two), unless otherwise specified.

Referring to "embodiments" in the present disclosure means that specific features, structures, or characteristics described in conjunction with the embodiments may be included in at least one embodiment of the present disclosure. The phrase appearing in various positions in the present disclosure does not necessarily refer to the same embodiment, nor an independent or alternative embodiment that is mutually exclusive with other embodiments. Those skilled in the art shall explicitly and implicitly understand that the embodiments described in the present disclosure can be combined with other embodiments.

In the embodiments of the present disclosure, the term "and/or" is only a description of the association relationship between related objects, indicating that there may be three types of relationships. For example, A and/or B may means: the existence of A, the simultaneous existence of A and B, and the existence of B. In addition, the character "/" in the present disclosure generally indicates that the related objects are in an "or" relationship.

In the embodiments of the present disclosure, the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and other directional or positional relationships indicated are based on the directional or positional relationships shown in the accompanying drawings, only for the convenience of describing the embodiments of the present disclosure and simplifying the description, and do not indicate or imply that the devices or components referred to must have specific orientations, be constructed and operated in specific orientations, and therefore cannot be understood as limitations on the embodiments of the present disclosure.

In the embodiments of the present disclosure, unless otherwise specified and limited, technical terms such as "mounting", "coupling", "connecting", "fixing" should be broadly understood. For example, they may mean fixed connection, detachable connection, or integrated. They may also mean a mechanical connection or an electrical connection, or direct connection or indirectly connection through an intermediate medium, or an inner connection between two components or an interaction relationship between the two components. For those skilled in the art, the specific meanings of the above terms in the embodiments of the present disclosure may be understood according to the specific situations.

In the accompanying drawings corresponding to the embodiments of the present disclosure, the thickness and area of each layer are enlarged for better understanding and ease of description. When describing a component (such as a layer, area, or plate) on another component or on a surface of component, the component may be "directly" located on the surface of another component, or there may be a third component between the two components. On the contrary, when describing a component on the surface of another component or when another component is formed or arranged on the surface of one component, it indicates that there is no third component between these two components. Furthermore, when describing a component as "roughly" formed on another component, it means that the component is not formed on the entire surface (or front surface) of the other component, nor is it formed on a partial edge of the entire surface.

In the embodiments of the present disclosure, when a component "includes" another component, unless otherwise specified, other components are not excluded and may be further included. In addition, when a component such as a layer, area, or plate is referred to as "on/located" on another component, it may be "directly on" the other component (i.e. located on the surface of the other component without any other components), or there may be another component present between them. In addition, when components such as layers, areas, plates are "directly located" on another component, or when components such as layers, areas, plates are located on the surface of another component, it indicates that no other components are located between them.

The terms used in the description of various embodiments of the present disclosure are only intended to describe specific embodiments and are not intended to be limiting. As used in the description of various embodiments and the accompanying claims, "said part" is also intended to include the plural form, unless the context otherwise expressly indicates. The components include layers, areas, or plates.

The above is only specific implementations of the present disclosure, but the scope of protection of the present disclosure is not limited to this. Any changes or replacements that are easily conceivable to those skilled in the art within the technical scope disclosed in the present disclosure should be included in the scope of protection of the present disclosure. Therefore, the scope of protection of the present disclosure shall be subject to the scope of protection of the claims.

## Claims

1. A track apparatus for stackers for a stocker, comprising:
an overhead track mounted on a top of an aisle in the stocker, wherein the overhead track is moveably engaged with a top of a stacker and is configured to provide overhead guide to horizonal movement of the stacker; and
ground tracks mounted on a bottom of the aisle in the stocker and parallel to the overhead track, wherein the ground tracks include two guide tracks and a travelling track arranged between the two guide tracks and parallel to the two guide tracks, the two guide tracks are configured to provide ground guide to the horizonal movement of the stacker, and the travelling track is configured to provide support to the horizonal movement of the stacker.

2. The track apparatus according to claim 1, wherein each guide track of the two guide tracks includes a first fixing plate and a first track provided with at least one sliding seat; and
wherein the first fixing plate is fixedly mounted on the bottom of the aisle, the first track is fixedly mounted on the first fixing plate, and the at least one sliding seat of the first track is configured to be connected to the stacker.

3. The track apparatus according to claim 2, wherein each guide track of the two guide tracks further includes at least one first limiting device, and each respective first limiting device of the at least one first limiting device includes a first anticollision block and a first buffer block; and
wherein the first anticollision block is fixedly mounted on the first fixing plate, the first buffer block is mounted on the first anticollision block, and the first buffer block is configured to elastically deform to buffer inertia in a collision in response to the stacker colliding with the respective first limiting device.

4. The track apparatus according to claim 2, wherein a plurality of first counterbored slots are defined on the first fixing plate, the plurality of first counterbored slots are configured for fixedly mounting the first fixing plate on the bottom of the aisle, and for adjustment of a position of the first fixing plate during mounting; and/or
a plurality of second counterbored slots are defined on the first track, the plurality of second counterbored slots are configured for fixedly mounting the first track to the first fixing plate using at least one fastening screw, and for adjustment of a relative position between the first track and the first fixing plate during mounting.

5. The track apparatus according to claim 1, wherein the travelling track includes a second fixing plate and a support plate mounted on the second fixing plate, the second fixing plate is configured to be fixedly mounted on the bottom of the aisle, and the support plate is configured to provide support to the horizonal movement of the stacker.

6. The track apparatus according to claim 5, wherein the travelling track further includes a profile arranged between the second fixing plate and the support plate, and the profile has a rigidity less than a rigidity of at least one of the second fixing plate and the support plate.

7. The track apparatus according to claim 6, wherein the travelling track further includes a contact layer arranged on the support plate, and the contact layer is configured to contact with a travelling wheel of the stacker to provide support to the horizonal movement of the stacker.

8. The track apparatus according to claim 7, wherein a first groove is defined on a top surface of the second fixing plate, a second groove is defined on a bottom surface of the support plate, and a third groove is defined on a top surface of the support plate; and
wherein the profile is embedded into the first groove and the second groove, and the contact layer is embedded into the third groove.

9. The track apparatus according to claim 8, wherein a plurality of mounting grooves are defined on the profile, the plurality of mounting grooves pass through the profile along a length direction of the profile, and each mounting groove of the plurality of mounting grooves is configured to receive a respective plurality of nuts;
wherein a respective cross-section of each mounting groove of the plurality of mounting grooves has an opening and a groove bottom, and a width of the opening is less than a width of the groove bottom;
wherein each nut of the respective plurality of nuts is configured to, after the profile is embedded into the first groove and the second groove, engage with a corresponding bolt passing through the support plate or through the second fixing plate to tightly fix the profile to the support plate or to the second fixing plate;
wherein a first through hole is defined on the profile, the first through hole passes through the profile along the length direction of the profile, and the first through hole is defined at a center of a cross-section of the profile; and
wherein a plurality of second through holes are defined on the profile, the plurality of second through holes pass through the profile along the length direction of the profile, each second through hole of the plurality of second through holes has a diameter less than a diameter of the first through hole, and the plurality of second through holes are defined to surround the first through hole and space from the first through hole along a width direction of the profile.

10. The track apparatus according to claim 8, wherein the third groove has a width that is greater than a width of the second groove and is greater than a width of the contact layer, gaps are defined on the support plate and on both sides of the third groove at intervals, and the gaps are configured for arranging and removing the contact layer through the gaps, and for adjustment of a position of the contact layer.

11. The track apparatus according to claim 7, wherein each of the second fixing plate, the profile, the support plate, and the contact layer has a respective segmented structure that includes a plurality of segments assembled together, and joints of segments of the second fixing plate, joints of segments of the profile, joints of segments of the support plate, and joints of segments of the contact layer misalign with one another, respectively;
wherein one respective joint of the joints of the segments of the contact layer has a structure of assembled beveled surfaces, each beveled surface of the beveled surfaces forms a sharp angle with a travelling direction, and the sharp angle ranges from 10° to 80°; and/or
wherein the contact layer is a plate material having low surface roughness and having a surface suitable for travelling of the travelling wheel of polyurethane.

12. The track apparatus according to claim 7, wherein a plurality of third counterbored slots are defined on the contact layer, the plurality of third counterbored slots are configured for fixing the contact layer to the support plate using screws through the plurality of third counterbored slots, and for adjustment of a horizonal relative position between the contact layer and the support plate during fixing using screws; and/or
wherein a plurality of fourth counterbored slots are defined on the second fixing plate, the plurality of fourth counterbored slots are configured for fixing the second fixing plate on the bottom of the aisle using screws through the plurality of fourth counterbored slots, and for adjustment of a horizonal relative position between the second fixing plate and the two guide tracks during fixing using screws.

13. The track apparatus according to claim 12, wherein the plurality of third counterbored slots are defined on two sides of the contact layer, and the plurality of fourth counterbored slots are defined on two sides of the second fixing plate; and
wherein the contact layer has a width greater than or equal to a sum of a width of the travelling wheel in an axial direction of the travelling wheel and a width of at least one respective third counterbored slot of the plurality of third counterbored slots, the support plate has a width greater than or equal to a sum of a width of the contact layer and a width of a reserved structure, the profile has a width greater than or equal to the width of the travelling wheel in the axial direction, and the second fixing plate has a width greater than or equal to a sum of the width of the support plate and a width of at least one respective fourth counterbored slot of the plurality of fourth counterbored slots.

14. The track apparatus according to claim 1, wherein the overhead track includes a single track constituted of a plurality of end-to-end connected rails, the stacker has a guide wheel assembly that is arranged on both sides of the single track and has a plurality of guide wheels, each guide wheel of the plurality of guide wheels is configured to moveably contact with a respective lateral surface of the single track to prevent the stacker from tilting; and
wherein each end of two ends of the single track is provided with a respective second limiting device including a second anticollision block and a second buffer block, the second anticollision block is fixedly mounted on the single track, the second buffer block is mounted on the second anticollision block, and the second buffer block is configured to elastically deform to buffer inertia in a collision in response to the stacker colliding with the respective second limiting device.

15. A stacker system, comprising the track apparatus according to claim 1 and the stacker;
wherein the stacker includes a travelling box, a support seat and a travelling wheel mounted on the support seat, one end of the support seat is rotatably hinged on the travelling box, an other end of the support seat is coupled to the travelling box via an elastic assembly elastically deformable at least in a vertical direction, and at least a portion of the support seat is arranged in the travelling box;
wherein each guide track of the two guide tracks includes a first fixing plate and a first track provided with at least one sliding seat, the first fixing plate is fixedly mounted on the bottom of the aisle, the first track is fixedly mounted on the first fixing plate, and the at least one sliding seat of the first track is configured to be connected to a bottom of the travelling box; and
wherein the travelling track includes a second fixing plate fixedly mounted on the bottom of the aisle and at least one layer arranged on the second fixing plate, the at least one layer includes an elastic layer having elastic characteristics, and the elastic layer and the elastic assembly are configured to absorb or suppress vibration transmitted by the travelling wheel together or individually.

16. The stacker system according to claim 15, wherein a respective through hole is defined on each of a top of and the bottom of the travelling box to form a through space, the through space is configured to allow vertical movements of the travelling wheel relative to the travelling box.

17. The stacker system according to claim 15, wherein the stacker further includes at least two sets of columns that are fixed on a top of the travelling box and form a vertical movement passage, each set of the at least two sets of columns includes at least two columns arranged at two ends of the travelling box along an X-axis direction, respectively;
the first track is provided with at least two sliding seats slidably matched with the first track, and the at least two sliding seats are arranged at two ends of the bottom of the travelling box along a Y-axis direction, respectively;
a projection of one respective column of the at least two columns along a Z-axis direction at least partially overlaps with a projection of a vertically corresponding sliding seat of the at least two sliding seats along the Z-axis direction; and
wherein the Y-axis direction represents a length direction of the travelling track, the X-axis direction is orthogonal to the Y-axis direction in a horizontal plane, and the Z-axis direction is orthogonal to the Y-axis direction in a vertical plane.

18. The stacker system according to claim 17, wherein the travelling box includes a first box portion and a second box portion arranged along the Y-axis direction, and the stacker further includes a lifting box configured to move along the vertical movement passage;
wherein the first box portion has a through space;
wherein two baffles are arranged in the second box portion and arranged to space from each other along the X-axis direction, a first mounting space is formed between the two baffles, a second mounting space and a third mounting space are formed on outer sides of the two baffles, respectively, and each of the second mounting space and the third mounting space is recessed towards the first mounting space;
wherein the stacker further includes two drive wheels arranged in the second mounting space and the third mounting space, respectively; and
wherein the stacker further includes a power mechanism arranged in the first mounting space and configured to drive the two drive wheels to rotate.

19. The stacker system according to claim 17, wherein each guide track of the two guide tracks further includes at least one first limiting device, and each respective first limiting device of the at least one first limiting device includes a first anticollision block and a first buffer block; and
wherein the first anticollision block is fixedly mounted on the first fixing plate, the first buffer block is mounted on the first anticollision block, and the first buffer block is configured to elastically deform to buffer inertia in a collision in response to the stacker colliding with the respective first limiting device.

20. The stacker system according to claim 17, wherein a plurality of first counterbored slots are defined on the first fixing plate, the plurality of first counterbored slots are configured for fixedly mounting the first fixing plate on the bottom of the aisle, and for adjustment of a position of the first fixing plate during mounting; and/or
a plurality of second counterbored slots are defined on the first track, the plurality of second counterbored slots are configured for fixedly mounting the first track to the first fixing plate using at least one fastening screw, and for adjustment of a relative position between the first track and the first fixing plate during mounting.

21. The stacker system according to claim 15, wherein the at least one layer further includes a first support plate mounted on the second fixing plate, and the first support plate is configured to provide support to the horizonal movement of the stacker and has elastic characteristics.

22. The stacker system according to claim 15, wherein the at least one layer further includes a second support plate mounted over the second fixing plate and a profile arranged between the second support plate and the second fixing plate; and
wherein the profile has a rigidity less than a rigidity of at least one of the second fixing plate and the second support plate, and the profile has elastic characteristics.

23. The stacker system according to claim 22, wherein the at least one layer further includes a contact layer arranged on the second support plate, the contact layer is configured to contact with the travelling wheel of the stacker to provide support to the horizonal movement of the stacker, and the contact layer has elastic characteristics.

24. The stacker system according to claim 22 or claim 23, wherein a first through hole is defined on the profile, the first through hole passes through the profile along a length direction of the profile, and the first through hole is defined at a center of a cross-section of the profile; and
wherein a plurality of second through holes are defined on the profile, the plurality of second through holes pass through the profile along the length direction of the profile, each second through hole of the plurality of second through holes has a diameter less than a diameter of the first through hole, the plurality of second through holes are defined to surround the first through hole and space from the first through hole along a width direction of the profile.
